# EUROPEAN PATENT SPECIFICATION

(11) **EP 4 102 501 B1**
(45) Date of publication and mention of the grant of the patent: **05.03.2025**
(21) Application number: 22177792.3
(22) Date of filing: 08.06.2022
(51) Int. Cl.: G10L 15/22, G06F 3/16, G06F 16/632, G10L 25/51

(54) **PROCESSING VOICE COMMANDS**
VERARBEITEN VON SPRACHBEFEHLEN
TRAITEMENT DE COMMANDES VOCALES

(30) Priority: 08.06.2021 US 202117341927
(43) Date of publication of application: 14.12.2022
(73) Proprietor: Comcast Cable Communications LLC, Philadelphia, Pennsylvania 19103 (US)
(72) Inventor: SAADATPANAH, Parsa, Philadelphia, 19103 (US)
(74) Representative: V.O.

(56) References cited:
- US-A1- 2012 035 924
- US-A1- 2014 074 466
- US-A1- 2014 270 194
- US-A1- 2015 086 033
- US-A1- 2019 066 670
- US-A1- 2020 184 962
- US-B1- 11 023 520

## Description

### BACKGROUND

Voice command processing systems may allow users to use voice commands to cause an associated action or a set of actions. However, as more voice-controllable services become available, confusion may arise if two different services are programmed to use the same voice command phrase. For example, the phrase "turn it up" could be used by both a voice-controllable media device (to increase audio volume) and a voice-controllable thermostat (to increase a temperature setting), and a voice command processing system might not be able to take the correct action. This ambiguity may frustrate a user. Document US 2012/035924 A1 discloses a method for disambiguation of a voice command with the selection of the target device in order to perform an action corresponding to the voice command. The disambiguation uses the current context including information obtained from ambient sound analysis.

### SUMMARY

The object of the invention is solved by the subject-matter of the independent claims. Preferred embodiments are defined by the dependent claims.

The following summary presents a simplified summary of certain features. The summary is not an extensive overview and is not intended to identify key or critical elements.

A voice command processing system may store information indicating various voice command phrases used by different voice-controllable services, and may use various types of information to resolve situations in which an ambiguous voice command phrase is heard. An audio clip (e.g., a recording) of a voice command spoken by a user may also comprise background noises (e.g., sounds of a show or movie being watched) captured while the user was speaking the voice command, and those background noises may be used for interpreting and processing the voice command. If a voice command processing system does not understand a spoken voice command, the voice command processing system may use the sounds of other entities in the background noises to interpret the request in the voice command. If the voice command processing system determines that a voice command can be applicable for two or more voice-controllable services (e.g., different devices, different applications on a computer, etc.), the voice command processing system may use the sounds of other entities in the background noises to select one of the voice-controllable services for receiving the voice command.

The voice command processing system may identify the sources of one or more sounds in the background noises and use information associated with the identified sources for interpreting the voice command. For example, a user may be watching a content item while issuing the voice command "show me more like this," and the background noise in the audio clip may comprise the audio of the content item. The voice command processing system may identify the content item being watched by the user from the background noises based on the audio of the content item in the background noises and interpret the voice command as requesting more programs like the content item that was heard in the background. Additional contextual information associated with the voice commands (e.g., identifications of the users saying the voice commands and/or other users in the room) and/or the content item (e.g., the video quality of the content item, a service outputting the content item, a genre of the content item, etc.) may be used to identify the content item.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows an example communication network in which the features described herein may be implemented.
FIG. 2 shows hardware elements of a computing device that may be used to implement any of the elements and features described herein.
FIG. 3A illustrates an example environment in which a voice command processing system of the present disclosure may be used.
FIG. 3B illustrates a data table indicating various example responses to an ambiguous voice command.
FIG. 4 shows a block diagram showing an example voice-enabled device hosting a voice command processing system that processes voice command based on background noises.
FIGS. 5A-E illustrate an example algorithm for processing voice commands with background information.
FIGS. 6A-D illustrate example search spaces for analyzing background noise fingerprint.
FIG. 7 illustrates an example image usable by a voice command processing system.
FIGS. 8A-B illustrate example user interfaces for specifying privacy settings related to data used for processing voice commands.

### DETAILED DESCRIPTION

The accompanying drawings show examples of various features. It is to be understood that the examples shown in the drawings and/or discussed herein are non-exclusive and that there are other examples of how the disclosure may be practiced.

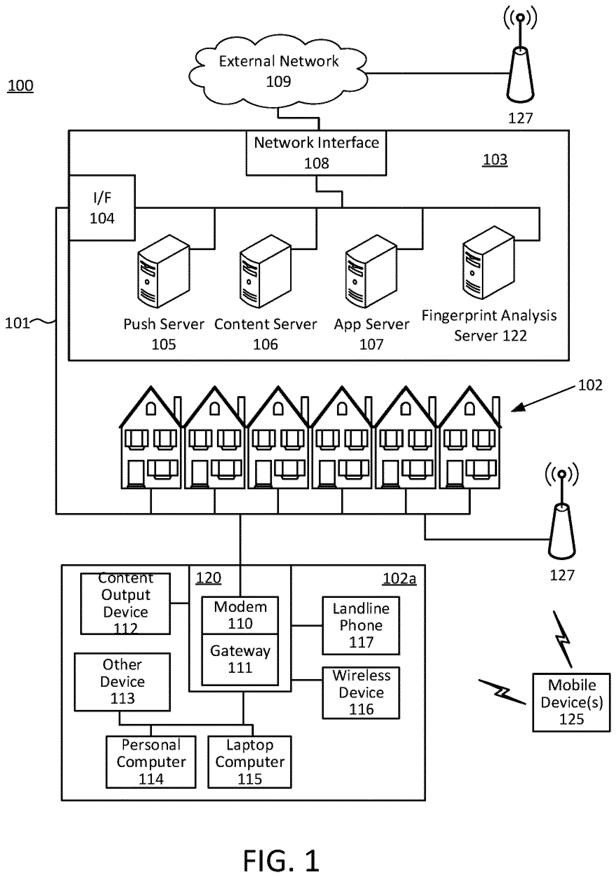

FIG. 1 shows an example communication network 100 in which features described herein may be implemented. The communication network 100 may comprise one or more information distribution networks of any type, such as, without limitation, a telephone network, a wireless network (e.g., an LTE network, a 5G network, a WiFi IEEE 802.11 network, a WiMAX network, a satellite network, and/or any other network for wireless communication), an optical fiber network, a coaxial cable network, and/or a hybrid fiber/coax distribution network. The communication network 100 may use a series of interconnected communication links 101 (e.g., coaxial cables, optical fibers, wireless links, etc.) to connect multiple premises 102 (e.g., businesses, homes, consumer dwellings, train stations, airports, etc.) to a local office 103 (e.g., a headend). The local office 103 may send downstream information signals and receive upstream information signals via the communication links 101. Each of the premises 102 may comprise devices, described below, to receive, send, and/or otherwise process those signals and information contained therein.

The communication links 101 may originate from the local office 103 and may comprise components not shown, such as splitters, filters, amplifiers, etc., to help convey signals clearly. The communication links 101 may be coupled to one or more wireless access points 127 configured to communicate with one or more mobile devices 125 via one or more wireless networks. The mobile devices 125 may comprise smartphones, tablets, or laptop computers with wireless transceivers, tablets or laptop computers communicatively coupled to other devices with wireless transceivers, and/or any other type of device configured to communicate via a wireless network.

An example premise 102a may comprise an interface 120. The interface 120 may comprise circuitry used to communicate via the communication links 101. The interface 120 may comprise a modem 110, which may comprise transmitters and receivers used to communicate via the communication links 101 with the local office 103. The modem 110 may comprise, for example, a coaxial cable modem (for coaxial cable lines of the communication links 101), a fiber interface node (for fiber optic lines of the communication links 101), twisted-pair telephone modem, a wireless transceiver, and/or any other desired modem device. One modem is shown in FIG. 1, but a plurality of modems operating in parallel may be implemented within the interface 120. The interface 120 may comprise a gateway 111. The modem 110 may be connected to, or be a part of, the gateway 111. The gateway 111 may be a computing device that communicates with the modem(s) 110 to allow one or more other devices in the premises 102a to communicate with the local office 103 and/or with other devices beyond the local office 103 (e.g., via the local office 103 and the external network(s) 109). The gateway 111 may comprise a set-top box (STB), digital video recorder (DVR), a digital transport adapter (DTA), a computer server, and/or any other desired computing device.

The gateway 111 may also comprise one or more local network interfaces to communicate, via one or more local networks, with devices associated with the premises 102a. Example types of local networks comprise Multimedia Over Coax Alliance (MoCA) networks, Ethernet networks, networks communicating via Universal Serial Bus (USB) interfaces, wireless networks (e.g., IEEE 802.11, IEEE 802.15, Bluetooth), networks communicating via in-premises power lines, and others. The lines connecting the interface 120 with the other devices associated with the premises 102a may represent wired or wireless connections, as may be appropriate for the type of local network used. One or more of the devices at the premises 102a may be configured to provide wireless communications channels (e.g., IEEE 802.11 channels) to communicate with one or more of the mobile devices 125, which may be on- or off-premises.

The devices in the example premise 102a may comprise, e.g., content output devices 112 (e.g., televisions), other devices 113 (e.g., a DVR or STB), personal computers 114, laptop computers 115, wireless devices 116 (e.g., wireless routers, wireless laptops, notebooks, tablets and netbooks, cordless phones (e.g., Digital Enhanced Cordless Telephone-DECT phones), mobile phones, mobile televisions, personal digital assistants (PDA)), landline phones 117 (e.g., Voice over Internet Protocol-VoIP phones), and any other desired devices. The mobile devices 125, one or more of the devices in the premises 102a, and/or other devices may receive, store, output, and/or otherwise use assets. An asset may comprise a video, a game, one or more images, software, audio, text, webpage(s), and/or other content.

One or more of the devices in the example premise 102a may be voice-enabled devices that may be controlled by voice commands from users in the premise 102a. The voice-enabled devices may be used in many different contexts in the premise 102a, such as controlling video and/or audio output of content output devices in the premise 102a (e.g., "turn on CNN," "turn the volume up," etc.), controlling heating or cooling systems in the premise 102a (e.g., "turn thermostat temperature up"), initiating outgoing telephone calls (e.g., "call Aaliyah"), receiving incoming telephone calls (e.g., "accept call"), controlling home security system (e.g., "enable security system till 7 am"), shopping (e.g., "buy dishwashing liquid"), sending and receiving e-mails, text messaging, web browsing, controlling others devices, search keywords (e.g., find a podcast where particular words were spoken), simple data entry (e.g., entering a credit card number), determining user voice characteristics, speech-to-text processing (e.g., word processors or emails), and many others. A voice command processing system may be configured to coordinate activities of the various devices, and may initially process a captured voice command in order to determine the corresponding action to take (e.g., directing the recorded voice command to a particular voice-enabled device, sending a control command based on the voice command, etc.). The voice command processing system may be implemented as hardware processors and/or software executing on a computing device. When a user communicates with a voice-enabled device by speaking, the user's speech is recorded as an audio clip. In addition to the user's voice command (e.g., "show me more like this"), the audio clip comprising the user's speech may also comprise background noises captured during the recording of the audio clip. The background noises may comprise sounds from one or more entities near the user. The entities may be human beings (e.g., other human beings in the same room as the user or the device), content output devices (e.g., televisions, personal computers, laptop computers, notebooks, tablets, netbooks, mobile phones, etc.), other devices (e.g., cordless phones, etc.), appliances (e.g., heating or cooling system, mowers, leaf blowers, blending machines, etc.) and/or other entities (e.g., toys, pets, etc.). The additional background noises from these entities may help the voice command processing system determine the appropriate course of action for the speaking user.

The voice command processing system may use speech recognition to interpret one or more requests in the voice commands spoken by the user in the content of the user's speech and determine an appropriate action to be taken based on the voice command. If a voice command processing system cannot interpret a request in a voice command (e.g., if the voice command matches commands for multiple voice-enabled devices), the voice command processing systems may use sounds of one or more entities in the background noises to interpret the voice command (e.g., the user says, "show me more programs like this" and the background noises comprising audio of the content item being watched by the user is used to determine which program the user is watching). After interpreting the voice command, the voice command processing system may trigger, based on the interpreted voice command, an action or a set of actions to process the user requests. The voice command processing system may be able to interpret the request, but may use the sounds of one or more entities in the background noises to determine the accuracy of the interpretation of the request (e.g., the user says, "show me more programs like this" and the voice command processing system is aware of the program the user is watching but uses the background noises comprising audio of the content item to confirm that the user is indeed watching the program, to confirm that the user was referring to that program), or if the user says "turn it down," and that command could apply equally to a volume setting of a television and a temperature setting of a thermostat, the system can determine that since there are no background noises matching any content item, that the command was likely intended for the thermostat and not the television. Additionally, the voice command processing system may comprise one or more cameras that record a video of the speaking user while recording the voice command, and the video captured in the recording may be used to interpret the voice command. The background images may comprise physical gestures made by the user while issuing the voice command (e.g., determining that the speaker is moving his hand from left to right in the video while saying "change" may be used to interpret the voice command as a request to change a channel) or certain activities of the speaking user (e.g., determining that the user is exiting his home while saying "turn on" may be used to interpret the voice command as a request to turn on the home security system).

The local office 103 may comprise an interface 104. The interface 104 may comprise one or more computing devices configured to send information downstream to, and to receive information upstream from, devices communicating with the local office 103 via the communications links 101. The interface 104 may be configured to manage communications among those devices, to manage communications between those devices and backend devices such as servers 105-107 and 122, and/or to manage communications between those devices and one or more external networks 109. The interface 104 may, for example, comprise one or more routers, one or more base stations, one or more optical line terminals (OLTs), one or more termination systems (e.g., a modular cable modem termination system (M-CMTS), or an integrated cable modem termination system (I-CMTS)), one or more digital subscriber line access modules (DSLAMs), and/or any other computing device(s). The local office 103 may comprise one or more network interfaces 108 that comprise circuitry needed to communicate via the external networks 109. The external networks 109 may comprise networks of Internet devices, telephone networks, wireless networks, wired networks, fiber optic networks, and/or any other desired network. The local office 103 may also or alternatively communicate with the mobile devices 125 via the interface 108 and one or more of the external networks 109, e.g., via one or more of the wireless access points 127.

The push notification server 105 may be configured to generate push notifications to deliver information to devices in the premises 102 and/or to the mobile devices 125. The content server 106 may be configured to provide content to devices in the premises 102 and/or to the mobile devices 125. This content may comprise, for example, video, audio, text, web pages, images, files, etc. The content server 106 (or, alternatively, an authentication server) may comprise software to validate user identities and entitlements, to locate and retrieve requested content, and/or to initiate delivery (e.g., streaming) of the content. The application server 107 may be configured to offer any desired service. For example, an application server may be responsible for collecting, and generating a download of, information for electronic program guide listings. Another application server may be responsible for monitoring user viewing habits and collecting information from that monitoring for use in selecting advertisements. Yet another application server may be responsible for formatting and inserting advertisements in a video stream being transmitted to devices in the premises 102 and/or to the mobile devices 125. The local office 103 may comprise additional servers, such as the fingerprint analysis server 122 (described below), additional push, content, and/or application servers, and/or other types of servers. Although shown separately, the push server 105, the content server 106, the application server 107, the fingerprint analysis server 122, and/or other server(s) may be combined. The servers 105, 106, 107, and 122, and/or other servers, may be computing devices and may comprise memory storing data and also storing computer executable instructions that, when executed by one or more processors, cause the server(s) to perform steps described herein.

The fingerprint analysis server 122 may be configured to receive data associated with the sounds of one or more entities in background noises captured by the devices in the premises 102 and 102a and identify the entities based on the received data. For example, the fingerprint analysis server 122 may receive data associated with the audio of a content item (e.g., a movie, a show, a gaming event, an advertisement, live news, etc.) being displayed by one of the devices in the example premise 102a. The fingerprint analysis server 122 may identify the displayed content item based on data associated with the audio of the content item. The fingerprint analysis server 122 may then provide information associated with the identified content item to the devices in the premises 102 and 102a. Additional details of the fingerprint analysis server 122 will be discussed further below.

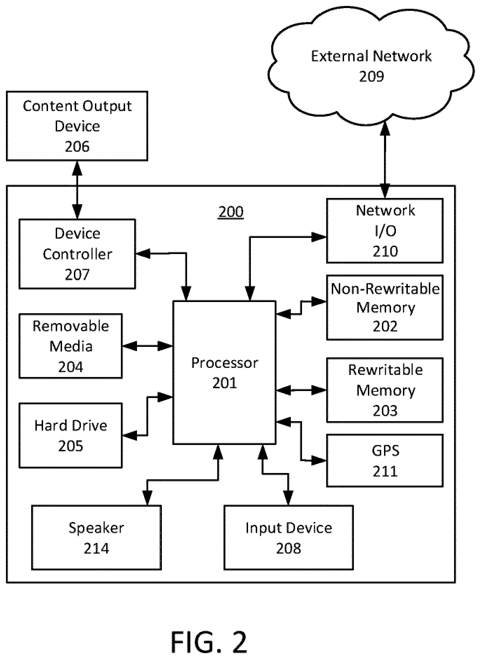

FIG. 2 shows hardware elements of a computing device 200 that may be used to implement any of the computing devices shown in FIG. 1 (e.g., the mobile devices 125, any of the devices shown in the premises 102a, any of the devices shown in the local office 103, any of the wireless access points 127, any devices with the external network 109) and any other computing devices discussed herein (e.g., any device comprising voice-enabled applications and/or voice command processing systems). The computing device 200 may comprise one or more processors 201, which may execute instructions of a computer program to perform any of the functions described herein. The instructions may be stored in a non-rewritable memory 202 such as a read-only memory (ROM), a rewritable memory 203 such as random access memory (RAM) and/or flash memory, removable media 204 (e.g., a USB drive, a compact disk (CD), a digital versatile disk (DVD)), and/or in any other type of computer-readable storage medium or memory. Instructions may also be stored in an attached (or internal) hard drive 205 or other types of storage media. The computing device 200 may comprise one or more output devices, such as a content output device 206 (e.g., an external television and/or other external or internal content output device) and a speaker 214, and may comprise one or more output device controllers 207, such as a video processor or a controller for an infra-red or BLUETOOTH transceiver. One or more user input devices 208 may comprise a remote control, a keyboard, a mouse, a touch screen (which may be integrated with the content output device 206), and/or a microphone for capturing audio clips comprising voice commands and/or background noises, etc. The computing device 200 may also comprise one or more network interfaces, such as a network input/output (I/O) interface 210 (e.g., a network card) to communicate with an external network 209. The network I/O interface 210 may be a wired interface (e.g., electrical, RF (via coax), optical (via fiber)), a wireless interface, or a combination of the two. The network I/O interface 210 may comprise a modem configured to communicate via the external network 209. The external network 209 may comprise the communication links 101 discussed above, the external network 109, an in-home network, a network provider's wireless, coaxial, fiber, or hybrid fiber/coaxial distribution system (e.g., a DOCSIS network), or any other desired network. The computing device 200 may comprise a location-detecting device, such as a global positioning system (GPS) microprocessor 211, which may be configured to receive and process global positioning signals and determine, with possible assistance from an external server and antenna, a geographic position of the computing device 200.

Although FIG. 2 shows an example hardware configuration, one or more of the elements of the computing device 200 may be implemented as software or a combination of hardware and software. Modifications may be made to add, remove, combine, or divide the components of the computing device 200. Additionally, the elements shown in FIG. 2 may be implemented using basic computing devices and components that have been configured to perform operations such as any operations described herein. For example, a memory of the computing device 200 may store computer-executable instructions that, when executed by the processor 201 and/or one or more other processors of the computing device 200, cause the computing device 200 to perform one, some, or all of the operations described herein. Such memory and processor(s) may also or alternatively be implemented through one or more Integrated Circuits (ICs). An IC may be, for example, a microprocessor that accesses programming instructions or other data stored in a ROM and/or hardwired into the IC. For example, an IC may comprise an Application Specific Integrated Circuit (ASIC) having gates and/or other logic dedicated to the calculations and other operations described herein. An IC may perform some operations based on the execution of programming instructions read from ROM or RAM, with other operations hardwired into gates or other logic. Further, an IC may be configured to output image data to a display buffer.

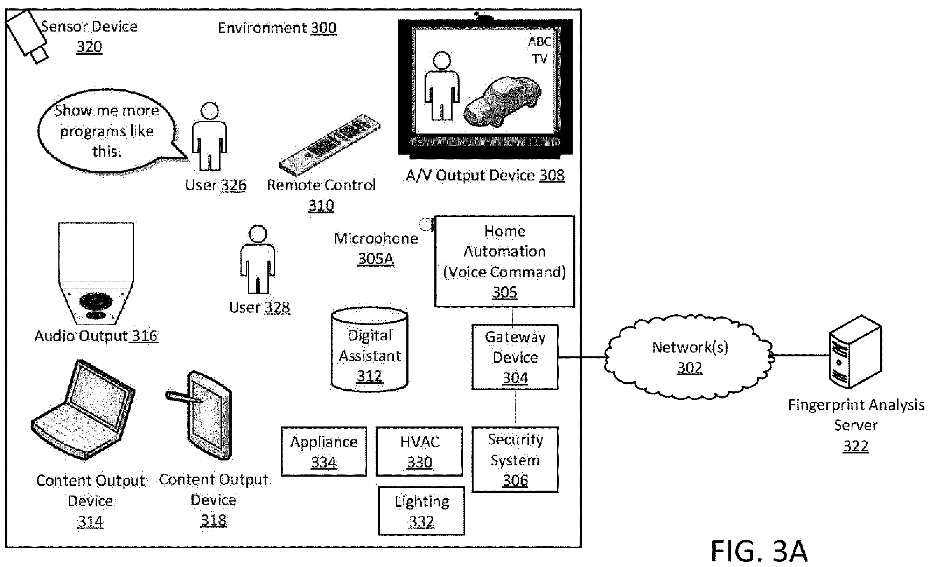

FIG. 3A illustrates an example operating environment 300 inside a premise (e.g., the example premise 102a in FIG. 1 or any one of the premises 102). The premise may be any location, such as a user residence, a commercial space, a public space, and/or a recreational facility. The environment 300 may comprise one or more users who may issue voice commands (e.g., user 326 and user 328), one or more content output devices (e.g., an audio/video output device 308, laptop computer 314, audio speaker system/stereo 316, and smartphone 318), and a gateway device 304. While FIG. 3A shows only two users, four content output devices, and a gateway device at the environment 300, any number of users, content output devices, and/or gateway devices may be similarly present. Additionally, the environment 300 may comprise one or more systems, such as a home automation system 305 and a security system 306. The home automation system 305 may be independent from, but communicatively coupled to, the security server 306. Alternately, the home automation system 305 may be incorporated into the security system 306 (e.g., as integrated hardware and/or software). The environment 300 may also comprise a remote control device 310 that may be voice-enabled and serve as a voice command processing system to receive and process voice commands from the users 326 and 328 via one or more microphone 310A. Additionally or alternatively, the environment 300 may comprise a voice-enabled digital assistant 312 (e.g., AMAZON ALEXA on the AMAZON ECHO devices, SIRI on an IPHONE, GOOGLE ASSISTANT on GOOGLE-enabled/ ANDROID mobile devices, etc.) that process voice commands from the users 326 and 328 via one or more microphone 312A.

The home automation system 305 may monitor and/or control various attributes in the environment 300 and may serve as a voice command processing system. The home automation system 305 may monitor and control various lighting systems (e.g., smart electrical plugs and/or switches, smart lighting, etc.), heating, ventilation, and air conditioning (HVAC) systems (e.g., smart thermostats, smart smoke detectors, etc.), entertainment systems (e.g., multimedia hubs, wearable devices, toy robots, etc.), pet monitoring devices and systems (e.g., electronically controlled dog doors, litter boxes, aquariums, terrariums, etc.), and/or smart appliances in the premise (e.g., a smart oven or stove, a smart coffee machine, smart locks, etc.), and any other devices such as those typically found around the premise. The home automation system 305 may typically connect with the controlled devices, systems, and/or appliances. The home automation system 305 may comprise a variety of devices, such as wall-mounted terminals, tablet or desktop computers, a mobile phone application, a Web interface that may also be accessible off-site through the Internet, the gateway device 304, and/or one of the content output devices (e.g., the content output devices 308, 314, 316, and 318). The home automation system 305 may be voice-enabled and may serve as a voice command processing system to receive and process voice commands from the users 326 and 328 via one or more microphone 305A, the remote control device 310, and/or the digital assistant 312 (e.g., AMAZON ALEXA on the AMAZON ECHO devices, SIRI on an IPHONE, GOOGLE ASSISTANT on GOOGLE-enabled/ANDROID mobile devices, etc.).

The security system 306 deployed at the environment 300 may communicate with a number of sensors that can be configured to detect various occurrences and/or other changes in state(s) at the environment 300. For example, the security system 306 may include an image sensing or capturing device (e.g., the camera 320) for periodically capturing an image of the environment 300. The camera 320 may be located at any suitable location throughout environment 300. Furthermore, the camera 320 may be positioned such that the display screens of one or more of the content output devices (e.g., the content output devices 308, 314, 316, and 318) in the environment 300 may be in the field of view of the camera 320. Additionally or alternately, the security system 306 may use the cameras of the content output devices (e.g., the content output devices 308, 314, 316, and 318) as additional image sensing or capturing devices for capturing images of the environment 300. The security system 306 may also comprise one or more door sensors, one or more window sensors, one or more smoke detectors, one or more glass break sensors, flood sensors, gas leak sensors, and medical sensors. While FIG. 3A shows a camera 320 which may be deployed at the environment 300 and monitored by the security system 306, any number of sensors, as well as any number of security servers, image sending or capturing devices, and/or different types of sensors, may be similarly deployed. In addition to communicating with various sensors, the security system 306 also may communicate with the home automation system 305 via the gateway device 304. This communication may, for example, enable the security system 306 to control other systems at the environment 300, such as HVAC (Heating, Ventilation, and Air Conditioning) systems 330 , lighting systems 332, home appliances 334 (e.g., dishwasher, refrigerator, clothes washing machine, etc.), pet monitoring devices and systems (e.g., electronically controlled dog doors, litter boxes, aquariums, terrariums, etc.), and other systems that might be connected to and/or controllable via the home automation system 305. The security system 306 may be voice-enabled and receive voice commands from the users 326 and 328 via one or more microphones of the security system 306, the remote control device 310, and/or the digital assistant 312. Those voice commands may initially be processed by the home automation system 305 and may be delivered to the security system 306 after the home automation system 305 determines that a recorded voice command was intended for that security system 306.

The gateway device 304 may implement one or more aspects of the gateway interface device 111, which was discussed above with respect to FIG. 1. This may, for instance, comprise receiving and/or decoding content via an information distribution network, as well as displaying and/or playing back such content on one or more of the content output devices (e.g., the content output devices 308, 314, 316, and 318). The gateway device 304, the home automation system 305, and the security system 306 may be implemented in a single device that, for example, is configured to both monitor and control the various sensors, devices, appliances, and systems that are installed at environment 300. Alternately, the gateway device 304, the home automation system 305, and the security system 306 may be independent computing devices and be communicatively coupled to each other. The gateway device 304 may facilitate the communications of voice-enabled devices or voice command processing systems of voice-enabled devices with the fingerprint analysis server 322 (e.g., the fingerprint analysis server 122 in the local office 103 in FIG.1) via networks 302 (e.g., the network 100 in FIG. 1).

The gateway device 304 may provide a local area network interface to allow communications among the various devices (e.g., the content output devices 308, 314, 316, and 318, the remote control 310, the digital assistant 312, etc.) and the various systems (the home automation system 305, the security system 306 including the sensor device 320, etc.) in the environment 300. The gateway device 304 may provide the various devices (e.g., the content output devices 308, 314, 316, and 318, the remote control 310, the digital assistant 312, etc.) and the various systems (the home automation system 305, the security system 306 including the sensor device 320, etc.) in the environment 300 internet connectivity and wireless local area networking (WLAN) functionalities.

One or more of the content output devices (e.g., the content output devices 308, 314, 316, and 318) and/or one or more of more systems in the environment 300 (e.g., the home automation system 305, the security system 306, software applications running on any of the devices, etc.) may be voice-enabled devices that are capable of receiving and interpreting voice commands. The voice commands may be received via one or more microphones that are part of or otherwise connected to a particular voice-enabled content output device, the remote control device 310, and/or the digital assistant 312. The voice-enabled devices may further be capable of controlling another device in the environment 300. For example, the content output device 318 may, in response to a voice command, communicate with another device such as the content output device 308 to cause the content output device 308 to record media content or to display media content. The communication between the content output device 308 and the content output device 318 may be a direct communication between the two devices or a communication via an intermediate device, such as the gateway device 304. If the content output device being controlled is itself a voice-enabled device, the content output device may control itself in response to the voice command. For example, if the content output device 308 is a voice-enabled device and has its own one or more microphones, the content output device 308 may, in response to a voice command it receives, record media content and/or display media content. If the content output device being controlled is itself a voice-enabled device and also capable of controlling another device, the content output device may receive a voice command and interpret the voice command to determine, in response to the voice command, whether to control itself and/or control the other device. If the content output device determines that the voice command is one that is also a voice command for the other device, then the content output device may take steps to avoid redundant action based on the same voice command. For example, the content output device could delay taking action on the command and determine whether the other device takes its corresponding action (e.g., the content output device can determine whether the other device lowers its volume). If the other device does not respond to the command within a predetermined time, then the content output device may take a delayed action in response to the command.

Voice-enabled devices (e.g., the content output devices 308, 314, 316, and 318, the home automation system 305, the security system 306, software applications executing on a computing device, etc.) may be controlled by voice commands spoken by the user 326 and/or the user 328, and the home automation system 305 may include a voice command processing system to provide centralized coordination of voice command responses. The voice command processing system may listen to various users or entities in the environment 300 by continuously recording audio clips via an integrated microphone, a remote control 310, a digital assistant 312, and/or other recording devices. Alternately, the user 326 and/or the user 328 may initiate recording of an audio clip comprising a voice command by pressing a button on the content output device, the remote control 310, the digital assistant 312, and/or other recording devices. The voice command processing system may then perform a speech recognition analysis on the recorded audio clips to identify voice commands. Alternately, the voice processing system of multiple voice-enabled devices may be hosted as a Software-as-a-Service (SaaS) application, a web-architected application, or a cloud-delivered service in a cloud based system such as Amazon Web Services (AWS). The voice processing system may be localized or distributed nationally or internationally and may include load balancing to handle processing voice commands from a large number of users, voice-enabled devices, and/or premises.

The voice command processing system (e.g., implemented by home automation system 305) may maintain a small vocabulary of words and/or phrases that can be used to recognize a number of voice commands and/or maintain a list of recognized voice commands. For example, a number of voice commands may be associated with controlling the security system 306, and other voice commands may be associated with controlling a content output device 308. Such a vocabulary and/or list of recognized voice commands may be stored by the voice-enabled device and/or by a different physical device, such as in the non-rewritable memory 202, the rewritable memory 203, the removable media 204, and/or the hard drive 205, accessible to the voice command processing system. After receiving an audio clip, a voice command processing system may identify words and/or phrases in the audio clip and match the identified words and/or phrases to words and/or phrases of recognized voice commands. If a matching recognized voice command is found, the voice command processing system may deliver the audio clip to the corresponding voice-enabled device, which may perform actions associated with the recognized voice command. The voice command processing system may also send commands to control devices that are to be controlled by the voice command, without requiring those devices to process the audio clip - this may be useful to provide voice control functionality to devices that, on their own, do not possess voice command processing ability.

A voice command processing system may control multiple devices based on received voice commands (e.g., the digital assistant 312 may control the home automation system 305, the security system 306, and/or one or more content output devices). Such a voice command processing system may maintain a vocabulary of recognized words and phrases and/or a list of recognized voice commands for each of the devices it controls. After receiving an audio clip, the voice command processing system may interpret the voice commands to identify the device that the speaker of the voice command intended to control by matching words and/or phrases in the received voice commands with recognized words and/or phrases in the list of recognized voice commands for each of the devices and/or systems it controls. For example, the voice command processing system of the home automation system 305 may receive an audio clip "turn on the light" and compare the received voice command to voice commands in the list of recognized voice commands for the home automation system 305 and the list of recognized voice commands for the security system 306. Based on the determined device or system and the request in the voice commands, the voice command processing system may allow for certain commands to be completed. Similarly, a voice-enabled device (e.g., the content output device 308) may host multiple voice-enabled applications (e.g., NETFLIX, YOUTUBE, HULU, email processing software, an application for controlling the settings of the voice-enabled device, etc.) and store a vocabulary of recognized words and/or phrases or a list of recognized voice commands for each of the applications. After recording or receiving an audio clip, the voice command processing system may interpret the voice command in the audio clip to identify the application that the speaker of the voice command intended to control by matching words and/or phrases in the received voice commands with recognized words and/or phrases in the list of recognized voice commands for each of the application.

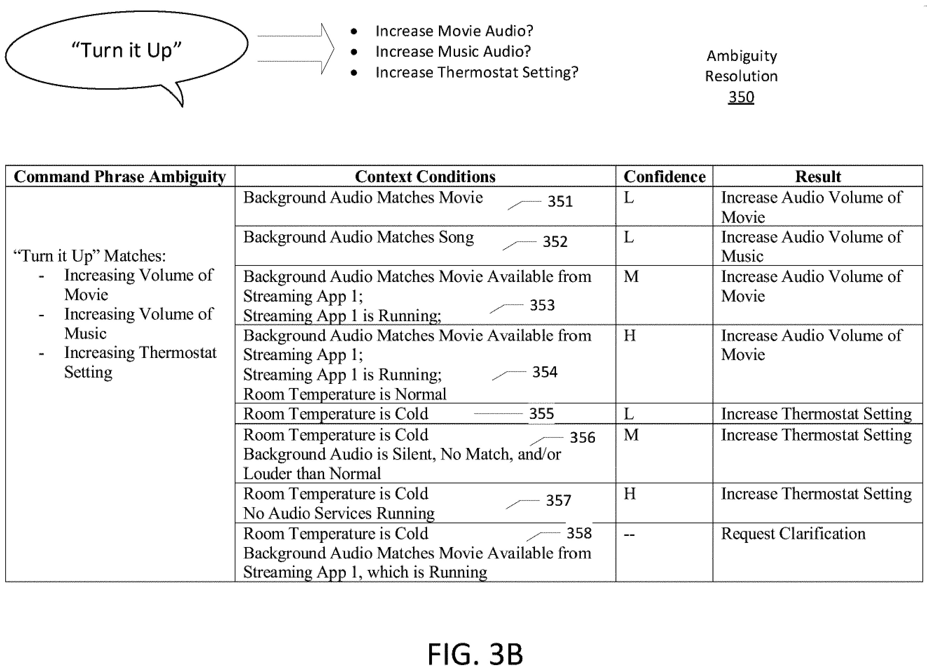

A particular voice command phrase may be valid for controlling multiple different services, and detecting the voice command phrase alone might not be sufficient for allowing the voice command processing system to determine what the user intended to control. For example, the phrase "turn it up" may be a valid voice command for increasing an audio level for a content output device 308, as well as for increasing a temperature setting on a thermostat. For such ambiguous voice command phrases, additional processing may be performed to resolve the ambiguity and to execute the speaker's intended function. Figure 3B is a table 350 illustrating example contextual information for resolving ambiguous voice commands; table 350 may be stored by the voice command processing system, and accessed as needed to resolve such ambiguities. For the Fig. 3B example, the voice command phrase "turn it up" may be recognized by the voice command processing system as matching valid voice commands for an audiovisual content output system (e.g., increasing audio volume for a user watching a streaming movie on a television 308), an audio content output system (e.g., increasing audio volume for a user listening to music on a stereo 316), and a thermostat (increasing a temperature setting of a heating/cooling system). The various context conditions in Fig. 3B illustrate how the voice command processing system may react to the ambiguity.

In Example 351, the voice command processing system may determine that the background audio matches the audio of a movie. The fact that the movie audio is heard in the background may suggest that the user's intended command was to increase the audio volume of the movie. The determination may be associated with a confidence value to allow other contextual clues to be taken into account. If desired, the voice command processing system may be configured to request further user clarification from the user, instead of assuming that the low-confidence interpretation was correct if the confidence is below a threshold (e.g., below a "Medium"). If the matching audio was the only detected contextual condition, then the voice command processing system may proceed to send a command to increase audio volume of a movie that the user was watching via the content output device 308. If other contextual conditions are detected, then other interpretations of the voice command may be reached, as will be discussed below.

In Example 352, the voice command processing system may determine that the background audio matches the audio of a song. The fact that the song audio is heard in the background may suggest that the user's intended command was to increase the audio volume of a music service that the user was listening to via an audio content output device 316. The voice command processing system may send a command to increase the audio volume of the audio content output device 316. Similar to example 351, this command may be associated with a relatively low confidence if that is the only available contextual information.

In Example 353, after determining that the background audio matches the audio of a movie. additional contextual information may be used to provide a greater degree of confidence. For example, the voice command processing system may determine that the background audio matches a movie that is available from a particular streaming application and that this streaming application is currently executing on the content output device 308 (e.g., by querying the streaming application or consulting a list of content offered by the streaming application), and that the user may be watching the movie via the streaming application. The voice command processing system may send a command to increase the audio volume of the movie being watched on the content output device 308, and may do so with greater confidence due to the additional context information. For example, while Example 351 heard background audio matching a movie, it was not known that the movie is actually being viewed by a user of the system. That matching movie audio could have simply been overheard audio from another user using a different device in the room (e.g., someone is watching a movie on their phone, perhaps). Knowing, in Example 353, that the movie is also being output by an application of the system increases the likelihood that the overheard audio was actually being viewed by a user of the system.

In Example 354, yet more contextual information may be used. In addition to the context information from Example 353, the voice command processing system may also determine that the current temperature, in the room in which the voice command phrase was heard, is within a normal temperature range. The voice command processing system may communicate with a thermostat and may retrieve historical temperature settings and current temperature measurements to make this determination. If the current temperature is within the normal temperature range, then the likelihood that the user intended to adjust the thermostat is relatively low, and as a consequence, the voice command processing system may adjust the audio volume of the movie being output on the content output device 308. This may be done with a high degree of confidence since several independent sources of contextual information are in agreement.

In Example 355, if a temperature measurement in the room is below normal, then this may suggest that the user's intent was to increase the temperature setting of the thermostat. The voice command processing system may increase the thermostat setting with low confidence if that is the only available contextual information.

In Example 356, if the temperature measurement in the room is below normal, and there is no background audio, then the system may increase the thermostat with medium confidence, as it is more likely that the user did not intend to control the audio of a movie or music. Similarly, if there is audio but it does not match a content item, or if there is a match, but the audio volume is already louder than usual (and/or already louder than an ambient sound level in the environment 300), then the voice command processing system may infer that the user was unlikely to have wanted to increase an audio volume even more, and as a consequence may increase the thermostat setting with medium confidence.

In Example 357, if the current room temperature is below normal and there are no audio services running, then the voice command processing system may determine, with high confidence, that the user intended to control the thermostat. The voice command processing system may then send a command to increase the thermostat setting.

In Example 358, the voice command processing system may be unable to resolve the ambiguity with sufficient confidence. The room temperature may be colder than normal, but there may also be a matching audio in the background that matches a movie that a currently-running streaming application has available. In such situations, the voice command processing system may determine that additional clarification is needed and may prompt the user to clarify whether the user intended to increase the volume or increase the temperature in the room. An audio prompt may be output (e.g., "Did you mean to increase audio volume?" or "Are you referring to content audio or room temperature - please say 'audio' or 'temperature' for the one you wanted to control"). The degree of confidence needed to take action may be configured as desired. The Example 358 context may be configured to default to controlling the audio. The default may be established based on the user's historical patterns, such as the user's preferred audio volume level, or by determining that the user has a tendency to make frequent audio adjustments and infrequent thermostat adjustments.

The table 350 may be used to resolve ambiguities, but it may also be used to indicate command results even for unambiguous commands. For example, the phrase "arm security system" may be uniquely associated with the security system 306. The table 350 may simply indicate that the result for that command is to change the status setting of the security system 306 to an armed state.

Sometimes, a voice-enabled device or system may receive an ambiguous voice command and fail to determine the request in the ambiguous voice command and/or the device to be controlled by using speech recognition analysis. An ambiguous voice command may be a voice command which partially matched with one or more voice commands from the list of recognized voice commands for the voice-enabled device or system, or the voice command may not match with any recognized voice command in the list of voice commands. The voice processing system of the voice-enabled device or system may determine one or more subject items (e.g., missing information) in the voice command and try to find the identity of the subject items to fully interpret the requests in the ambiguous voice commands. The subject items may be associated with a content item a content output device is outputting, a voice-enabled device, a voice-enabled system, a voice-enabled service/application, an attribute of a voice-enabled device/system/service/application that the user is trying to control, etc.

As another example, the user 326 may issue a voice command "show me more programs like this" to the content output device 308, which may be coupled with a DVR and host applications for multiple video on-demand streaming content services (e.g., NETFLIX, HULU, YOUTUBE, PEACOCK, etc.) that do not share their streaming activities with the content output device 308. Therefore, the voice command processing system may recognize the phrase "show me more program like this" but may not be able to determine which program the user is watching if the user is streaming the program from one of the multiple video on-demand streaming content services that do not share their streaming activities. The voice command processing system may learn the identity of the program by recognizing the audio of the program playing in the background of the recorded voice command and then use that identity to generate and display a content recommendation for the user. As another example, the user 326 may issue a voice command "play the next episode." Therefore, the voice command processing system may recognize the phrase "play the next episode" but may not be able to determine which video on-demand streaming content service the speaker is targeting and/or whether the speaker is targeting the DVR that is coupled to the content output device 308. The voice command processing system may determine which service (e.g., DVR, NETFLIX, PEACOCK, etc.) is in current use and direct the voice command to that service. Even if the voice command is directed to that service, the voice command processing system may also use the voice command "play the next episode" for its own purposes. For example, the voice command processing system may learn the identity of the program (and use that identity to generate its own content recommendation for the user.

Additional information related to the environment 300, the users, the content output devices, and/or the systems in the environment 300 may be used to correctly interpret the ambiguous voice commands. The voice command processing system may interpret the request in a voice command on its own and then use additional information related to the environment 300 to confirm the accuracy of the interpretation.

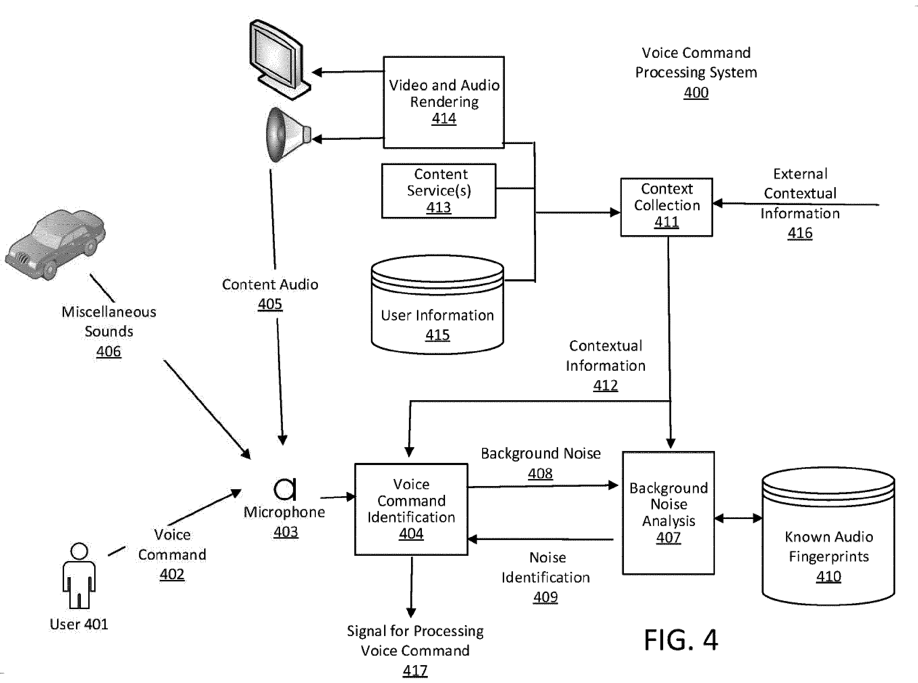

FIG. 4 shows a block diagram with an example voice command processing system 400 that may be used to carry out the various features described herein. The FIG. 4 illustration illustrates example processes for ease of description, and the processes can be implemented on any desired combination of processors and devices (e.g., one or more of the devices 111-116 and 125 in FIG. 1, or the content output devices 308, 314, 316, and 318, the gateway device 304, the home automation system 305, the security system 306, or the digital assistant 312, in FIG. 3), and may be implemented as software, hardware, and/or a combination of hardware and software.

A user 401 may speak a voice command 402, and the voice command 402 may be captured by one or more microphones 403. The microphones 403 may be standalone microphones and/or integrated into other devices such as a handheld remote control, portable computing device, smartphone, etc. A voice command identification process 404 may perform audio processing to recognize the voice command 402. Any desired speech recognition technique may be used to identify the user's voice in the audio clip. The voice command identification process 404 may retrieve a voice pattern of the user 401 and may use this pattern to identify the user's voice in the audio captured by microphone 403. The voice command identification process 404 may filter audio signals with frequencies that are associated with human speech from the audio clip by using any desired filtering technique. The voice command identification process 404 may also filter one or more signals with frequencies that are not associated with human speech and classify these audio signals as background noises 408

The voice command identification process 404 may parse speech in the filtered audio signals that are associated with human speech into blocks or chunks more suitable for subsequent speech processing. For example, linear predictive coding (LPC) can be used to break the human speech into various items, such as verbs, sentences, nouns, and so on. Speech recognition can be performed to identify a request in the identified items in the human speech. For example, the voice command identification process 404 may identify a request by fully or partially matching the identified items in the speech to one or more recognized voice commands in the list of recognized voice commands for the voice-enabled device 400. Duplicated items and items indicating filler words (e.g., "um," "uh," "er," "ah," "like," "okay," "right," "you know," etc.) may be discarded before the speech reorganization process. Various speech recognition may be used to perform speech recognization, such as hidden Markov Models (HMM), dynamic time warping (DTW)-based speech recognition, neural networks, Viterbi decoding, and deep feedforward and/or recurrent neural networks.

If a voice command 402 is detected and is not ambiguous (e.g., "switch to CNN," "increase thermostat temperature by 2 degrees, etc.), then the voice command identification process 404 may simply send a corresponding command signal 417. The command may control a device, such as controlling a thermostat to increase a temperature setting or contenting a content output device to switch to CNN, in accordance with the voice command 402. The command signal 417 may include a copy of the audio that the microphone 403 captured, which may be helpful if the target device has voice processing capability of its own. For example, if the voice command identification process 404 determines that the voice command 402 was intended for a voice-enabled content service 413, then the signal 417 may send a copy of the microphone's 403 audio to the voice-enabled content service 413, thereby allowing the content service 413 to process the audio on its own.

However, if the voice command identification process 404 supports multiple different voice-enabled devices, and if the same voice command 402 is usable for multiple devices (e.g., turn it up"), then an ambiguity may result. The voice command identification process 404 may use table 350 to determine a response to the voice command 402 and may enlist the assistance of other processes to help identify the correct response. Additionally or alternatively, the voice command identification process 404 may be able to determine which device the voice command is targeted for but may still find the voice command to be ambiguous (e.g., "show me more program like this," etc.).

The other processes may identify background sounds that were captured by the microphone 403 when the user 401 spoke the voice command 402. The background sounds may have included content audio 405 of a video program that the user 401 was watching when the voice command 402 was spoken and/or other miscellaneous sounds 406 (e.g., passing cars outside, other people, pets, household appliances, etc.). Some or all of these background sounds may be used to help the voice command identification process 404 determine the intent of the voice command.

The voice command identification process 404 may use any desired audio filtering technique to separate the voice command 402 from the audio captured by the microphone 403, resulting in background noise 408 that may comprise the content audio 405 and/or other miscellaneous sounds 406. For example, the voice command identification process 404 may filter the audio captured by the microphone 403 to remove the recognized voice command (e.g., by applying an inverse audio signal of the voice command), and the remaining sounds in the audio may be designated the background noise 408. Portions of the audio occurring before and/or after the recognized voice command may be designated the background noise 408. In return, the background noise analysis 407 may provide an identification 409 of the content audio 405 (and/or any other recognized noise in the background noise 408), and the voice command identification process 404 may use this identified content item to determine the intent behind the voice command 402, and to determine how to react to the voice command 402.

The background noise analysis 407 may compare the background noise 408 (or a fingerprint pattern of the background noise 408) with a database 410 of known sounds to identify sounds in the background noise 408 (e.g., identify a movie being watched while the voice command 402 was spoken; identify a household appliance that was in use, etc.). The database 410 may contain audio fingerprints for a large variety of content items, such as video programs, movies, songs, online videos, audio books, etc. Any desired type of audio fingerprinting may be used and may identify characteristics of content for purposes of comparison (e.g., frequency levels, colors, patterns, objects, etc.). The database 410 may also contain audio fingerprints for sound sources other than content items, such as sounds of household appliances, smoke alarms, security systems, barking dogs, etc. The database 410 may allow the voice command identification process 404 to identify the various sounds that are in the background noise 408, and any desired audio (and/or video) fingerprinting technique may be used for supporting audio and/or visual searching.

Fingerprints of content items stored in the fingerprint database 410 may be tagged with one or more characteristics associated with the content item, such as the name of the content item, the season number, the episode number, the genre of the content item, actors present in the content item, content providers broadcasting or streaming the content item, broadcast time, video quality of the content item and so on. For example, a fingerprint for a show named "HAWAII FIVE-O" may be tagged with the genres "crime" and "drama," actors "Scott Park" and "Grace Kim," video quality "4K," and content provider "CBS." As another example, a fingerprint for a movie named "The Sleepover" may be tagged with the genre "comedy," actors "Sadie Stanley" and "Maxwell Simkins," video quality "8K," and content provider "NETFLIX." Additionally, the database 410 may comprise fingerprints of entities other than content items, such as fingerprints of sounds of HVAC systems, lawnmowers, pets, etc.

The size of the database 410 used for the background noise analysis 407 will affect the time that the background noise analysis 407 comparison requires, as the background noise 408 may need to be compared to more entries if the database 410 has more entries. To help streamline this process, context information may be used to limit the comparison to a subset search space of the database 410. For example, if the background noise analysis process 407 knows that the user 401 historically watches a lot of action movies, then the background noise analysis 407 may begin its analysis by focusing on comparing the background noise 408 to known audio 410 of action movies. With a smaller search space, the background noise analysis 407 may more quickly identify sources of sound in the background noise 408.

A context collection process 411 may supply contextual information 412 to the background noise analysis 407, to assist with the recognition process. The context collection process 406 may gather context information from a variety of sources.

One source of context information may deal with the content service(s) 413 that the user 401 is using. The user 401 may have access to content items via multiple different content services 413. A content service may, for example, comprise and/or otherwise be associated with a source of content. A content service may comprise a remote linear content provider that broadcasts television channels on a cable service (e.g., NBC, CBS, FOX, HGTV, etc.) and/or streams live events (e.g., sporting events, news, weather, etc.). A content service may also be a remote video on-demand (VOD) streaming content provider (e.g., NETFLIX, AMAZON PRIME VIDEO, HULU, APPLE TV+, DISNEY PLUS, HBO NOW, PEACOCK, ITUNES, etc. that provides content items to speakers/users based on the speakers/users' requests). Additionally, the content service may be a local content service provider in the premise (e.g., DVD, DVR recordings, content recorded on a user's phone or computer, a video feed from a security camera, etc.). The user 401 may choose to watch a content item from one of the content services 413. The chosen content service may enable retrieval of the selected content item from one or more content servers (e.g., the content server 106 in FIG. 1, and/or content servers of remote linear content providers or remote on-demand streaming content providers) or devices (e.g., DVD player, DVR, a user's phone or computer, a security camera, etc.).

If the background noise analysis 407 is provided with contextual information 412 indicating that the user 401 is currently using a video streaming application such as PEACOCK, but PEACOCK does not share information about its streaming activities (e.g., which content item is currently being streamed, etc.), then the background noise analysis 407 may use the contextual information that PEACOCK is currently in use to identify the content item being streamed by PEACOCK. The background noise analysis 407 may begin its sound matching comparison by comparing the background noise 408 with known audio 410 of content items that are available from the PEACOCK streaming application. The known audio database 410 may include information indicating one or more sources for various content items represented in that database. However, if PEACOCK does provide information identifying content being output, such as through an application program interface (API), then the background noise analysis 407 may not be needed, as the system can simply query the API to receive information identifying the content being output.

The contextual information 412 may include information about the usage of various devices, such as the video and audio rendering device 414. If the background noise analysis process 407 knows, for example, that a display device is not in use, but an audio device is in use, then the audio matching comparison can focus on audio content such as songs and musical soundtracks, instead of video content.

The contextual information 412 may include information from a user database 415. The user database 415 may contain various kinds of information about the user 401, such as user preferences, viewing history, service usage history, application permissions, demographic information, subscription information, voice characteristics, temperature settings for the thermostat, usage history for lighting, etc. This user information may be useful in, for example, deducing whether the user 401 is likely to be watching a favorite show or to limit the search space for content items based on the user's preferences. The user database 415 may comprise samples of the user 401's voice to assist in recognizing the user 401. The user database 415 may indicate frequently-viewed genres of content items, preferred genres based on the time and day (e.g., morning, afternoon, evening, weekend, weekday, etc.), and/or other characteristics of users in the environment 300. The user's frequently viewed genres of content items, or preferred genres based on the time and day may be used to determine a search space that comprises content items associated with the speaker's preferred genres and not other genres, as will be discussed further below.

The user database 415 may contain privacy settings for the user 401. The privacy settings may indicate the user's preferences regarding usage of the contextual information 412. For example, the user 401 may indicate whether the user gives permission to have photos taken in the room, or facial recognition to occur, or viewing history information to be accessed, etc. The user 401 may wish to only allow voice recognition of the user's 401 own voice and not of any other human voices that may be captured by the microphone. The user 401 may indicate that certain portions of the viewing history are not to be used (e.g., individual content items, or content types, that the user 401 does not wish to be identified).

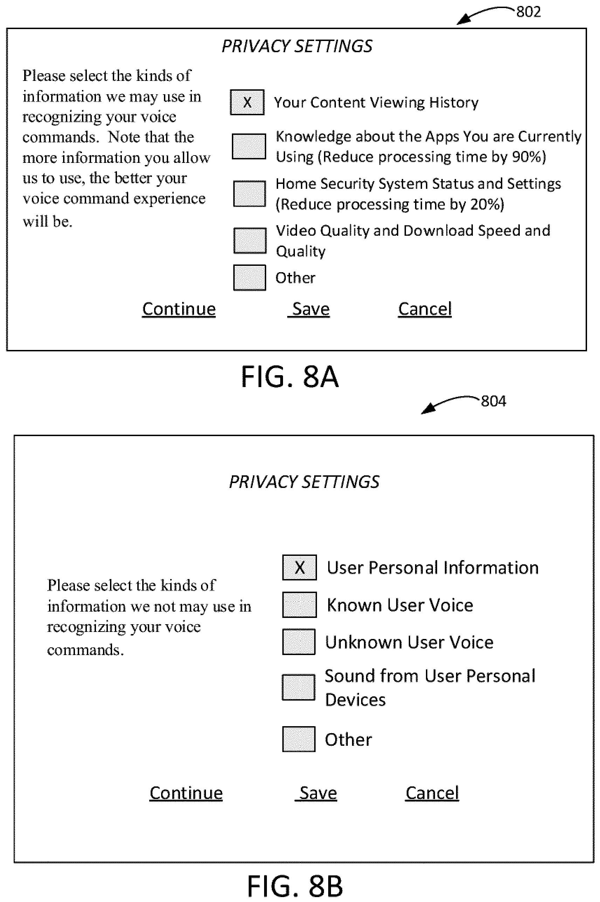

FIG. 8A illustrates an example privacy setting user interface 802 that enables a user to choose types of data that can be used as contextual information when processing voice commands. Some or all of the options may indicate that if such options are chosen, the time taken to process voice commands may be reduced by a certain amount (e.g., percentage, time, etc.). The time reduction percentages may be calculated by determining how much that particular contextual information will reduce the search space for identifying matching fingerprints. For example, the user interface may indicate to the speaker that using information regarding which content application the user is currently using to view content items may reduce the processing times of voice commands by 90%, and using information from the home security system may reduce the processing times of voice commands by 20%. FIG. 8B illustrates another example user interface 804 that enables a speaker to choose what types of data the voice command processing system cannot use when processing voice commands. For example, as shown in FIG. 8B, the user has indicated that he or she does not want the voice command processing system to use his or her personal information while processing voice commands.

The contextual information 412 may be useful to the background noise analysis process 407 for narrowing the search space for recognizing a sound in the background noise 408. The contextual information 412 may also be useful to the voice command identification process 404 to assist in evaluating the actions in, for example, the conditions in table 350 discussed above. For example, if the voice command identification process 404 knows that the current temperature in the room is colder than the user's normal preference as indicated in the user information 415, then the voice command identification process may be more likely to conclude that the user's "turn it up" voice command was intended to increase the thermostat setting. The contextual information 412 may be used for both the background noise analysis 407 and the voice command identification 404.

The contextual information 412 may include image data captured by a camera. For example, the security system 306 may send images captured by the camera 320. The voice command identification process 404 (or other processes in voice command processing system 400) may identify various objects in the captured images that may reduce the search space for identifying various entities in the background noise 408, or otherwise assist in handling the voice command 402. For example image processing may recognize users who are in the room when a voice command 402 is spoken, and the preferences of those users may be used to limit the search space for content audio recognition.

Additionally or alternately, the captured images may comprise the display screen of a content output device 308 outputting the content item. The genre of the content item may be determined based on visual objects present on the display screen (e.g., a display screen showing players playing football in a field may indicate that the content item may be a sporting event). The background noise analysis process 407 may initiate a reduced search space that only includes sounds of sporting events.

A logo of the content service may be recognized from the captured images of the display screen. The background noise analysis process 407 may initiate a reduced search space that only includes sounds of content items available via the identified content source for identifying the content item. The security system 306 may be configured to capture images whenever the microphone 403 records an audio clip. Additionally or alternately, the security system 306 may capture images at periodic intervals (e.g., every thirty seconds, every minute, five minutes, and so forth) and transmit the captured images to the context inferring engine 406.

The contextual information 412 may include data from a gateway device (e.g., the gateway device 304 in FIG. 3) indicating the quality of video of the content item that is being streamed via the gateway device 304. For example, the gateway device 304 may send information indicating the quality of the video data (e.g., HD, 4K, 8K, etc.) being sent to the content output device 308 for display, and the search space can be focused on content items that are available at that quality (e.g., limiting an initial search to content items that are available in 4K, because the user is apparently streaming a 4K content item via the gateway 304.

The contextual information 412 may include data indicating the status of various devices on the premises. For example, the home automation system 305 may send data to the context collection process 411 regarding which lights are on in the environment 300, the states of the HVAC systems (e.g., temperature setting, fan setting, timers, information from smoke detectors, etc.), which entertainment systems (e.g., multimedia hubs, wearable devices, toy robots, etc.) are currently active and their states, and/or information about active and inactive smart appliances in the environment 300 (e.g., a smart oven or stove, a smart coffee machine, smart locks, etc.), etc. Data from the home automation system 305 may also be used to modify the search space the background noise analysis process 407. For example, if the home automation system 305 indicates that the coffee machine is on, this information may be used to determine, from user information 415, that the user 401 often watches a particular talk show while drinking coffee. Therefore, the reduced search space for identifying the background noise 408 may initially focus on finding matches among talk show audio samples.

The contextual information 412 may also include external contextual information 416 received from remote sources. For example, information about the user 401 usages of a streaming service may be obtained from a streaming service server located remotely from the user's home. Any of the contextual information discussed herein may be obtained from an external source.

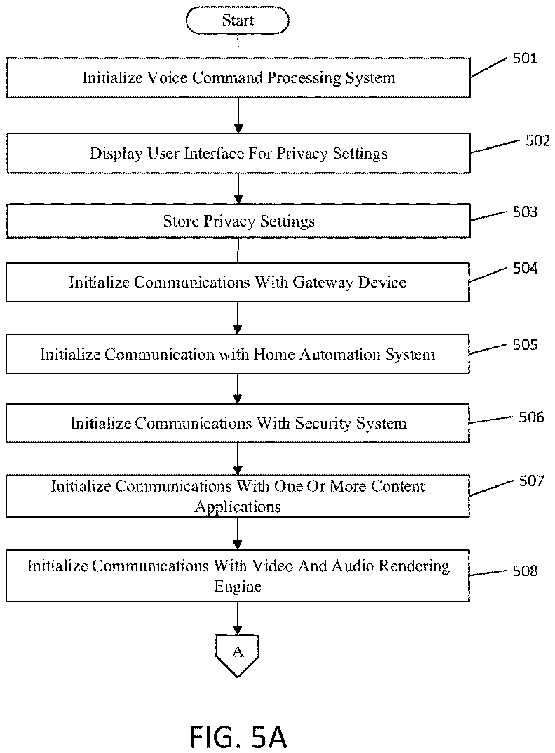

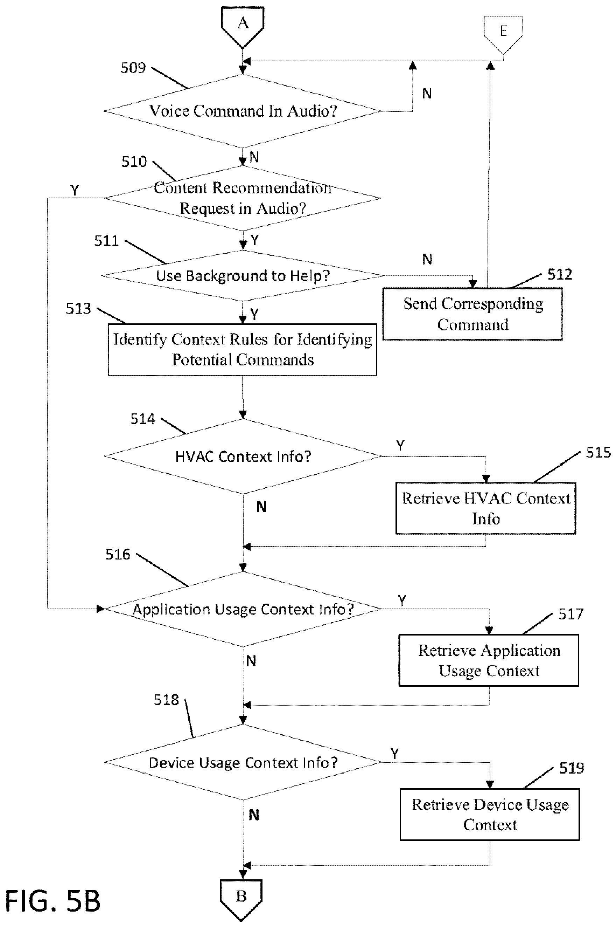

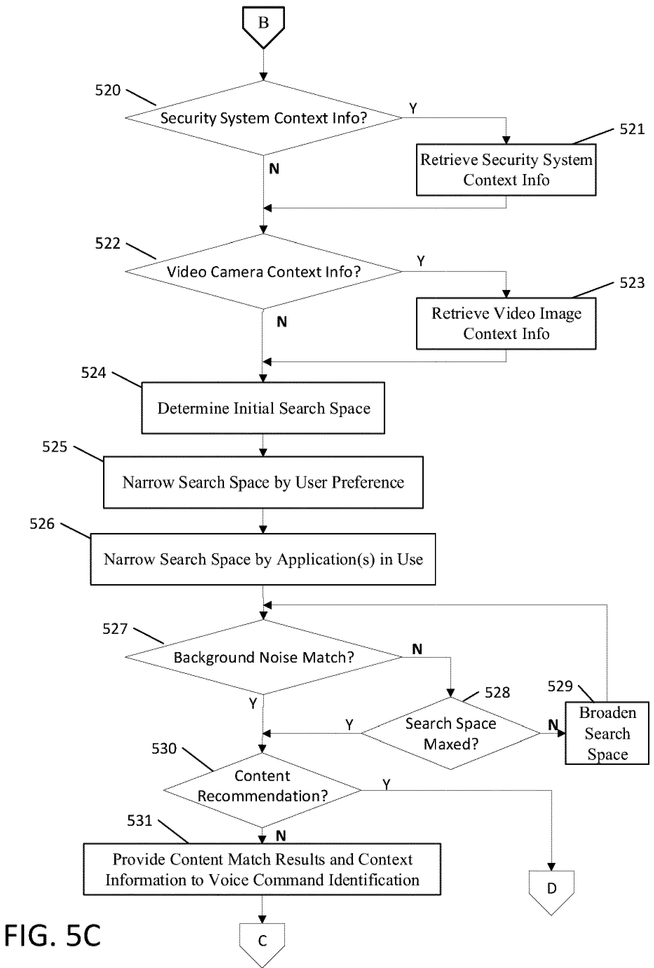

FIGS. 5A-E show an example algorithm for using background noises to interpret voice commands. The various steps may be performed by components of the voice command processing system 400, the content output devices 308, 314, 316, and 318, the gateway device 304, the home automation system 305, the remote control 310, the digital assistant 312, and/or any other desired computing devices. The example steps in FIGS. 5A-E may be performed in different orders and with different, fewer, or additional steps than those illustrated. Multiple steps can also be combined.

In step 501, a voice command processing system may be initialized in one or more computing devices, such as those illustrated in the voice command processing system 400 in FIG. 4). Initializing the voice command processing system in the computing device may comprise downloading a software installation package, installing the software installation package, configuring the installed voice command processing system to communicate with some or all of the elements shown in Fig. 4, and downloading and/or creating table 350, the user information 415, and any of the other data described herein.

As part of this initial configuration, one or more user interfaces may be displayed to a user 401 to gather user information 415, such as their viewing preferences, desired thermostat settings for different days and times, subscription services, etc. This information may also be gathered automatically by the voice command processing system 400 by monitoring user behavior over time.

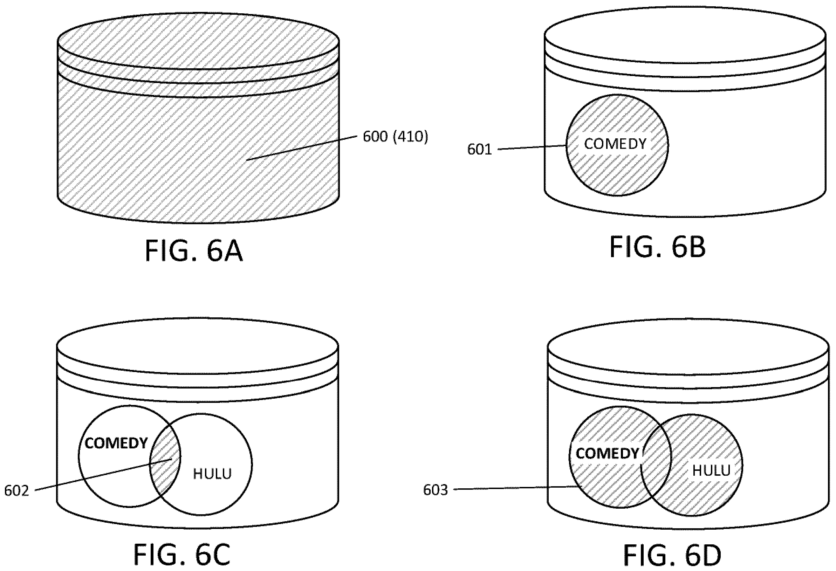

Privacy can be an important concern to user 401, and in step 502, the user 401 may be prompted to provide privacy settings. Figures 6A and 6B illustrate example user interface screens that may be provided to the user 401 via any desired computing device that is configuring the voice command processing system 400. A screen 602 may ask the user to select types of device usage information that will be used for context information 412. The user 401 may choose to allow the context collection process 411 to have access to the user's content viewing history, the usage of various software applications and services, the user's home security system 306 settings, history, and status information, gateway 304 information regarding downloads, usage of devices under the control of the home automation system 305, and any other device usage that the user 401 may wish to keep private. A screen 604 may ask the user about personal information, such as the user's voice pattern, face for facial recognition, how to handle unknown users/potential visitors (e.g., whether to process unrecognized voices), and any other personal aspect of the user 401.

A pre-existing profile for privacy settings may already be stored, for example, in user information 415, and a user interface may be displayed based on the pre-existing profile. Alternatively, different predefined privacy settings may be identified (e.g., the predefined privacy settings may include default profiles for using all the sounds identified in the background noises and all the contextual information gathered by the voice command processing system, etc.) and a user interface may be displayed based on the pre-defined privacy settings. After receiving user inputs via the displayed user interface, the user inputs from the displayed user interfaces may be stored as privacy settings for the user in a database at step 503.

At step 504, communication may be initialized with a gateway device (e.g., the gateway device 304 in FIG. 3) to enable communication with devices that may be remote from the user's premise. Initializing the communication process with the gateway device 304 may further enable the gathering of information (e.g., quality of video streamed data, such as HD, 4K, 8K, etc.) regarding video or audio packets requested from external content service providers. Alternately or additionally, the gateway device 304 may be configured to send information associated with the video or audio packets periodically or when requested by the voice command processing system 400. Initializing communication with the gateway device 304 may further enable communications with other devices in the environment, such as content output devices, that are also communicatively coupled to the gateway device 304.

At step 505, communication with a home automation system (e.g., the home automation system 305 in FIG. 3) may be initialized to enable the gathering of contextual information associated with a voice command, a user issuing a voice command, a content item the user is watching, and/or the environment surrounding the user. For example, the home automation system 305 may provide information associated with various systems in the user's residence (e.g., the HVAC systems, entertainment systems, multimedia hubs, wearable devices, a smart oven or stove, a smart coffee machine, smart locks, etc.). Initializing the communication process with the home automation system may configure the voice command processing system to receive information from the home automation system periodically or when requested by the context collection process 411. Alternately or additionally, the home automation system 305 may be configured to send the information periodically.

At step 506, communication may be initialized with a security system (e.g., the security system 306 in FIG. 3) to enable the gathering of contextual information associated with the security system 306. For example, the security system 306 may provide images captured by one or more cameras in the user's residence that are coupled to the security system (e.g., the camera 320 in FIG. 3), and/or provide information regarding current security settings, security system status, historical usage, etc. Initializing the communication process with the security system 306 may configure the voice command processing system 400 to receive images from the security system periodically or when requested by the context collection process 411. Alternately or additionally, the security system 306 may be configured to send captured images periodically.

At step 507, communication may be initialized with one or more content applications (e.g., content services 404 in FIG. 4) used by the user 401, such as video streaming services, Internet content providers, video on-demand services, video game streaming services, etc. Initializing the communication process with the content applications may configure the voice command processing system 400 to receive content consumption information from the content applications periodically or when requested by the context collection process 411. Alternately or additionally, the content applications may be configured to send the information periodically.

At step 508, communication may be initialized with a video and audio rendering engine (e.g., the video and audio rendering engine 414 in FIG. 4) to gather contextual information regarding the quality of the audio and/or video being rendered (e.g., HD, 4K, 8K, 5-channel audio, 7.1 audio, etc.). Initializing the communication process with the video and audio rendering engine 414 may allow the voice command processing system 400 to receive information from the video and audio rendering engine 414 periodically or when requested by the context collection process 411. Alternately or additionally, the video and audio rendering engine 414 may be configured to send the information periodically.

After initialization, the voice command processing system 400 may begin to listen for potential voice commands. The microphone 403 may continuously record audio clips in the environment 300, and if any sound beyond a minimal threshold is detected, a determination may be made in step 509 as to whether a voice command was detected in the audio clip. The voice command may include a keyphrase, such as "Hey Xfinity" or "Hey Alexa," to help clearly indicate that a voice command is being spoken.

The presence of a voice command may be determined by filtering audio signals associated with human voice using various signal filtering techniques (e.g., frequency-division multiplexing) and analyzing the filtered audio signals by using any speech recognition technique, such as hidden Markov Models (HMM), dynamic time warping (DTW)-based speech recognition, neural networks, Viterbi decoding, and deep feedforward and/or recurrent neural networks. A voice command may be identified in the audio clip by identifying a word or a phrase in the filtered audio signals, where the identified word or phrase comprises a request by a speaker of the word or phrase to control one of many computing devices near the speaker. The identity of the speaking user 401 may be determined by analyzing the prosodic characteristics of the user's speech, such as pitch, loudness, tempo, rhythm, and intonation, for example, with stored data 415 indicating the prosodic characteristics of the user. If a voice command is not identified in the audio clip, the algorithm continues to wait for another recorded audio clip.

The presence of the voice command may be determined using any speech recognition technique, such as hidden Markov Models (HMM), dynamic time warping (DTW)-based speech recognition, neural networks, Viterbi decoding, and deep feedforward and/or recurrent neural networks. The voice command may be separated from any other sounds in the audio captured by microphone 403, and those other sounds may be designated as the background noises 408.

If a voice command is identified, then a determination may be made at step 510 as to whether the voice command comprises one or more requests for content recommendation (e.g., "show me more programs like this"). If content recommendation requests are determined, the algorithm may proceed to step 516.

If a content recommendation is not identified, then a determination may be made at step 511 as to whether additional background processing will be used to assist in processing the voice command. If, for example, the voice command was clearly understood and unambiguous (e.g., "Hey Xfinity, please arm the security system"), then the voice command may be processed without needing any additional assistance regarding background noises. For example, the voice command may be understood with a high level of confidence or a confidence level that is higher than a predetermined confidence threshold. This confidence may be indicated by a voice recognition process and/or table 350. Such a clear identification may occur if the recognized voice command is only assigned to one corresponding result in table 350. In that case, in step 512, a corresponding command may be sent based on the recognized voice command. For example, a control signal may be sent to the security system 306, changing the security setting to an armed state based on clearly identifying a voice command to do so.

However, if the voice command is ambiguous (e.g., if the same voice command is valid in table 350 for multiple different results or if critical information is missing in the voice command) or if the voice command is interpreted or understood with a low level of confidence or the confidence level does not satisfy a predetermined confidence threshold, then additional processing of background information may be used to help resolve the ambiguity. The table 350 may be consulted to retrieve entries for the ambiguous voice command (e.g., if an ambiguous "turn it up" command was heard, then the table 350 may contain entries for the possible results associated with that ambiguous command). The entries may indicate one or more types of contextual information that can be used to resolve the ambiguity (e.g., content audio matching, applications being used, etc.), and in step 513, those context types may be determined. In the example table 350, for the ambiguous voice command "turn it up," the ambiguity may be resolved using: 1) audio content matching (e.g., recognizing audio of movie/song); 2) application usage (e.g., streaming app 1 in use); 3) content source availability (e.g., movies available from streaming app 1); 4) thermostat information (e.g., room temperature and user's temperature preference); and 5) room audio level (e.g., audio volume). To assist with resolving the ambiguity, as indicated in the table 350, these various types of context information may be retrieved. Additionally, while resolving ambiguity is one example of using background information, there may be other reasons. For example, if the voice command processing system 400 simply wishes to provide an added service to complement a content source 413, then the background processing may be helpful. The voice command processing system 400 may wish to identify content items that a user device is outputting, so that a separate set of content recommendations (distinct from the content source 413 being outputted) may be provided. Such a content recommendation service may provide recommendations at a more comprehensive level - if the user 401 uses five different content sources 413, a comprehensive content recommendation system may offer recommendations based on knowledge of the user's usage of all of the different content sources 413. Alternately or additionally, instead of processing background noises after determining ambiguous voice commands, the background noises may be periodically processed (e.g., every five minutes, every 10 minutes, etc.) to identify sources of various sounds in the background noises and/or content items being outputted by content devices. An ambiguous voice command may be interpreted by using information from the last processing of background noises.

Context information from a heating/ventilation/air conditioning (HVAC) system 330 may be useful. If, in step 514, such information would help resolve the ambiguity, then in step 515, the context collection process 411 may obtain context information from an HVAC system 330. This context information may include thermostat settings, current measured temperatures, current HVAC status (e.g., heat is running, air-conditioning is running, etc.), historical heating and/or cooling patterns, etc. The examples above are merely examples, and with the proliferation of the Internet of Things (IoT) connecting more and more smart devices (wearables such as watches, video game consoles, smart appliances, etc.), context information may be obtained from any sort of device, depending on the contexts that will help resolve a particular voice command.

In step 516, if application usage context information would be useful in resolving the ambiguity, then that application usage context information may be retrieved 517. Retrieving the application usage context information may comprise the context collection process 411 sending a request to various content service applications 413 to inquire about whether the content services are in use. The context collection process 411 may communicate with one or more external servers to request external contextual information 416 regarding current applications that may be in use. For example, the user information 415 may indicate that the user 401 has subscriptions to several streaming services, and the context collection process 411 may comprise communicating with those streaming services to determine whether they are in current use by the user 401. The context collection process 411 may also send requests to various computing devices to request identification of applications that are currently in use. The collected context information may comprise more than simply a binary indication of whether the application is in use, or which applications are in use. Other application details may also be retrieved. For example, if the application provides information identifying a title of a content item being streamed, or a library of available content items, or historical usage information, etc., then such additional application details may also be retrieved.

In step 518, if device usage context information would be useful in resolving the ambiguity, then the device usage context information may be retrieved 519. Similar to the application usage context collection 516, the device usage context information may be retrieved by sending requests to various devices that are associated with the user, to determine which devices are in current use. Various device contexts may be identified, and several additional examples are illustrated in the following steps.

For example, the context collection process 411 may determine whether the video and audio rendering 414 is in use or if the gateway 304 is currently in use. The security system 304 may be an example of such a device, and in step 520, a determination may be made as to whether security system 304 context information would be useful in resolving the ambiguity. If so, then the context collection process 411 may retrieve security system 306 information (e.g., current armed status, security sensor history, alarm schedule, etc.) from the security system 306 in step 521. Usage information from the gateway 304 may be obtained, indicating bandwidth being used for streaming, a source of streaming content, information indicating types of data being streamed and to which device, etc. Usage of appliances may be determined. For example, the status of a coffee maker may be used if a user 401 tends to watch television while drinking coffee in the morning.

Video cameras, such as sensor 320, may also provide context information. For example, the voice command processing system 400 may use facial recognition to recognize the user 401 issuing the voice command and may retrieve preferences of the user 401 from user information 415 to resolve an ambiguity in a voice command. Multiple users may be recognized as well, and multiple user preferences may be retrieved from user information 415. In step 522, a determination may be made as to whether video camera context information would be useful in resolving the ambiguity. If so, video image context information may be retrieved at step 523. The video image context information may be one or more images from a camera, and/or may be information processed using one or more images from a camera. For example, the video image context information may simply comprise an identification of a user 401 whose face was recognized via a facial recognition process. Various facial recognization techniques may be used, such as machine learning-based models, including regression-based models, neural network-based models, and/or fully-connected network-based models.

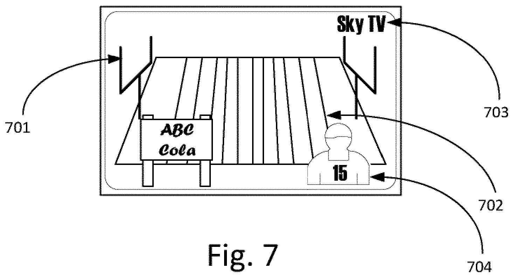

The video context information may comprise other recognized objects in the one or more images from a camera. For example, a camera may capture an image of a display screen in the room (e.g., audio/video output device 308), and an object recognition process may be executed on the captured image to recognize one or more objects being displayed on the display screen. A recognized video source logo may help indicate a content source (e.g., a television channel, streaming service, etc.) that the user 401 was watching when speaking the voice command. Actors visible on the display screen may be recognized through a facial recognition process and may be identified in the video image context information. A fingerprint analysis server 322 may be able to recognize a video content item by recognizing scenes from a video image (e.g., by generating image fingerprints to allow visual searching to find a scene in a content item), and may provide context information identifying the source and/or content item on the display screen. One or more objects, such as actors, objects, a genre of the content item being displayed via the content output device, and/or logos of a content service outputting the content item may be identified from the screen of the content output device. The genre of the content item may be determined based on one or more objects identified from the display screen in the image. For example, as shown in FIG. 7, based on recognizing a field and a goal post 701, a playing field 702, a network logo 703, or a famous sports announcer 704, the genre of the content item may be determined to be a sporting event, and the source of the content item may be identified as a broadcast sports network.

The image processing is not limited to images from a camera in the environment. The same processing may be performed on video images being displayed by a display device (e.g., audio/video display 308), or sent to such a display device by gateway 304.

The context information collected by the context collection process 411 may be used to streamline the audio search for identifying sounds in the background noise 408. In step 524, an initial search space of the database 410 may be determined. The initial search space may be the entire database 410, which would allow the voice command recognition system 400 to recognize the most possible matches in the background audio 408. However, the collected context information may help reduce this search space. Figures 6A-D illustrate examples of how the context information can reduce the initial search space, and the initial search space 600 may begin with the entire database 410.

In step 525, the search space may be reduced based on the user's 401 preferred content item. For example, the context collection process 411 may determine the identity of the user 401 based on facial recognition context information in step 520 and may also obtain user preference information 415 corresponding to the identified user 401. If the user 401 prefers watching comedies, then the search space 600 may be reduced to (at least initially) focus on audio fingerprints for comedic content items 601. If a search were executed using this reduced space, then the audio in the background noise 408 would be compared against the audio fingerprints for comedies 601, which is smaller than the entire database 410, and as a consequence, this search would be conducted much faster. However, additional context information may be used to even further narrow this search space.

In step 526, the search space may be reduced based on the application(s) that are currently in use. For example, if in step 513 it is determined that the user 401 is using the HULU content streaming application, then the search space may be reduced to focus on content items that are available from that streaming service by eliminating content items that are not available from that streaming service. As noted previously, the database 410 may contain information indicating one or more sources for each of the listed content items, and this information may be used for this reduction. Further reducing the search space may result in an intersection 602 of comedies on HULU, and searching this space for a match with the background noise 408 may be accomplished much faster than searching the entire database 410.

Steps 525 and 526 are merely examples. The use of context information to reduce the audio fingerprint search space may use different contextual information, and/or may omit some of the contextual information, and may generally use any of the types of context information described herein. For example, contextual information associated with a certain actor may also be used to narrow the initial search space. The contextual information associated with the actor may be determined from recognizing the actor (e.g., via facial recognition in obtaining device context information at step 518, or as part of image processing in step 522, on the screen of the display screen outputting the content item. The initial search space may be narrowed by selecting content items that are associated with the identified actor (e.g., if John Smith is recognized from the image of the display screen, select fingerprints that are tagged as being associated with John Smith). In some examples, multiple actors may be identified at step 523, and the initial search space may be determined by selecting content items that are associated with some or all the identified actors.

In step 527, the reduced search space may be searched to find a matching audio fingerprint that matches the background noise 408. Any desired fingerprint matching process may be used, and if a match is not found, then the search space may be broadened. For example, the fingerprint may comprise sound amplitudes or frequency of the sound wave, as measured at several points in time. However, any type of fingerprint may be generated using various components of the sound wave.

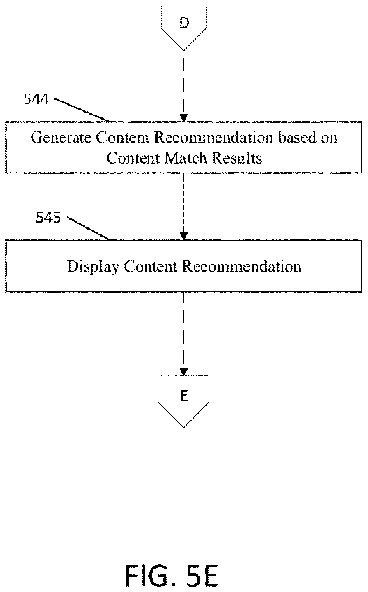

As illustrated in Fig. 6D, if no match is found in the initial search through space 602, then a similar search may be executed using a broader search space 603, comprising a union of the comedic content types and content items available from the HULU application that was determined to be in use. Successive searches and broadening may be performed until a match is found. In step 528, a determination may be made as to whether the search space can be broadened (e.g., it can be broadened if the search space is not already the full database 410), and if it can, then the search space will be broadened in step 529 (e.g., by changing an intersection to a union determination as illustrated, and/or by removing limitations added by one or more context information), and the search run again in 527. If there is a match and if it is determined at step 530 that the voice command comprises a content recommendation, then the algorithm may proceed to step 544 in FIG. 5E. Otherwise, the results of the match, as well as the context information gathered by the context collection process 411, may be provided to voice command identification 404 for further processing 531. In step 531, the user's privacy settings may be taken into account, and context information may be withheld based on those privacy settings. If there is no match in step 527, and the search space is already at maximum size (e.g., the full database 410 was searched), then the algorithm may proceed to step 530.

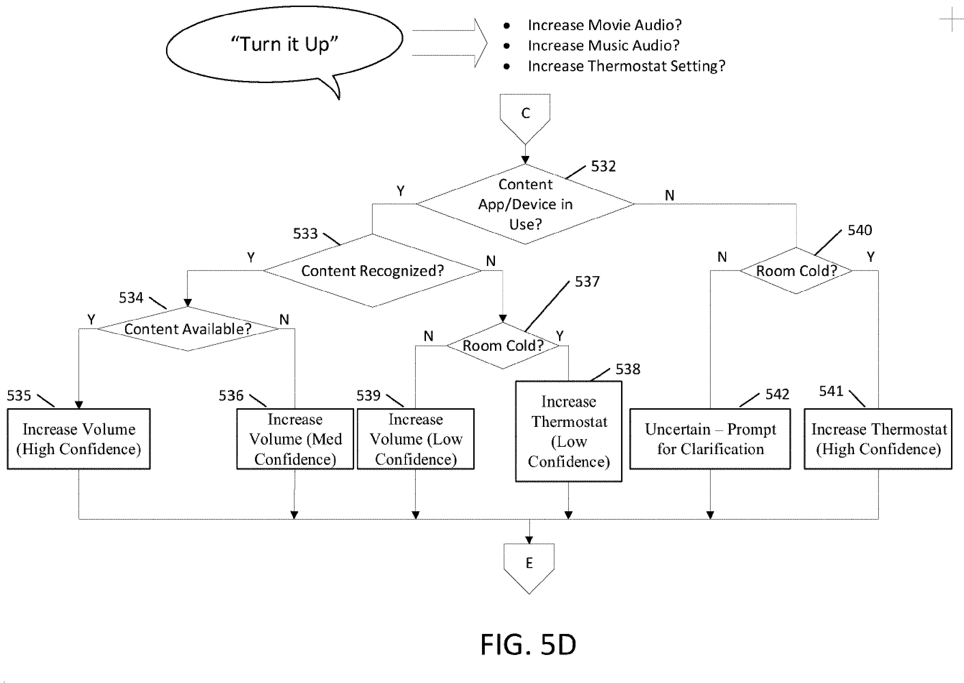

In step 532 of FIG. 5D, an example process of using the context information and content identification results to process the voice command 502 may begin for the "turn it up" example. In step 5532, the ambiguity resolution table 350 may indicate how the match and context information should be used to resolve a command ambiguity. The ambiguity resolution table 350 may indicate different logical processes for different commands that have been identified as potentially ambiguous. The example process may be based on the ambiguity resolution table 350, although the example process illustrates just an example of how that table 350 may be implemented. Alternative logical processes may be used for different voice commands, depending on how the voice commands are ambiguous and how the context information may be used, and the different logical processes may be indicated in the ambiguity resolution table 350. In step 532, a determination may be made as to whether a content-providing device or application is currently in use (e.g., as determined in steps 516 and/or 518). If such an application or device is in use, then in step 533, a determination may be made as to whether the background audio 408 was recognized as a content item (e.g., a particular movie, television program, etc.) in the background noise analysis 407. If the content item was recognized, then in step 534, a determination may be made as to whether the recognized content item is in a list of content items available from the application or device currently in use. This may be determined using the context information received in steps 517 and 519. If the recognized content item is indeed available from a content application or device that is currently in use, then in step 533, the voice command identification 404 may conclude that the "turn it up" voice command should be treated as a command to increase the audio volume of the content output device or application that is in use. This conclusion may be deemed a high-confidence conclusion given the context, and a corresponding volume control command may be sent, for example, to audio/video output device 308.

If, however, in step 534, the recognized content item is not known to be available from the content application or device that is currently in use, the voice command identification 404 may still conclude that the "turn it up" voice command was a request to increase audio volume 536, but this determination may be made with a lower confidence (e.g., a "Medium" confidence level). As noted above, a threshold may be established for a degree of confidence required for the system to take action - if a conclusion cannot be reached with sufficient confidence, then the system may request assistance from the user 401, as indicated further below.

In step 533, if the content was recognized in the background audio 408, then in step 537, a determination may be made as to whether the current temperature in the room is colder than the normal range of temperature that is preferred for the HVAC 330. This information may be retrieved, for example, in step 515. If the room is cold, then the voice command identification 404 may conclude that, given the contextual circumstances of a content app/device in use, unrecognized content in the background audio 408, and a cold room, that the "turn it up" voice command was intended to increase the temperature setting of the HVAC thermostat. Given the context, this determination may be made with a lower confidence. On the other hand, if the room is not currently cold, then the voice command identification 404 may conclude that the "turn it up" command was intended to increase the audio volume of the content application/device that is currently in use 539. This determination, given the context, may also be given a low confidence.

In step 532, if there is no content application or device currently in use, then the resolution of the "turn it up" ambiguity could simply depend on the temperature in the room. The temperature may be checked in step 540, and if the room is cold, then in step 541, the voice command identification 404 may conclude that the voice command was a request to increase the temperature of the room. A control signal may be sent to the HVAC 330 to increase the temperature setting of the HVAC 330 thermostat.

If, in step 540, it is determined that the room is not cold, then the contextual information might not be able to resolve the ambiguity. There is no content application or device in use, and the room is not currently cold, so it may remain ambiguous what the user meant with the "turn it up" command. In that situation, in step 542, the voice command identification 404 may conclude that there is insufficient information to resolve the ambiguity and may prompt the user 401 for clarification as to what was intended. The prompt may be an audio message played via audio output device 316 and may ask the user to restate the desired command or to use a different phrase for the intended result (e.g., "Say 'volume' if you meant to increase the audio; say 'temperature' if you meant to increase the room temperature."). After processing the voice command, the process may return to step 509 to await the next voice command. The example process in Fig. 5D illustrates a resolution of a command ("Turn it Up") that could be ambiguous between controlling a thermostat or audio output device. Different logical processes may be used for different commands that have different types of ambiguity. For example, if a command is potentially ambiguous between controlling a display brightness or a motorized window shade, or between display brightness and an ambient lighting system, then the logical process may similarly be used to resolve that ambiguity, with different resulting commands from the examples shown in Fig. 5D.

FIG. 5E illustrates an example process of using content identification results to generate content recommendations for voice commands that comprise content recommendation requests (e.g., "show me more program like this"). The content recommendations may be generated based on content items that a user device is outputting. These content items may be identified by identifying audios of the content items in the background noise. Contextual information may be gathered at steps 516-523 and used to narrow the search space for finding matching audio fingerprints for the audios of the content items. For example, application usage context information may be useful to determine which content services are in use and the search space may be narrowed to comprise content items originating from the content services in use. Context information collected from the video and audio rendering 414 may also be used to determine which content services are currently in use. Information from the gateway device 304 may be used to determine the video quality of the content items and the search space may be narrowed to comprise content items of the determined video quality. Contextual information from the security system 304 may be used to determine users present in the premise and the search space may be narrowed based on content viewing characteristics of the users present in the premise (e.g., users prefer comedies and the actor "June Smith"). Content information from video cameras, such as sensor 320, may also provide context information, such as identification of the user issuing the voice command. Object recognition process may be executed on the captured images of the video cameras to recognize one or more objects being displayed on the display screen of a content output device (e.g., a video source logo that may help indicate a content source, actors, a genre of the displayed content item), and the search space may be narrowed based on the recognized objects in the images. The narrowed search space may be searched to find a matching audio fingerprint that matches the audios of the content items in the background noise.

In step 544, a content recommendation may be generated comprising content items that are similar to the identified content items from the content identification results at step 527. For example, the content recommendation may comprise content items from the same genre as the identified content item, with the same actors, plots, ratings, directors, and/or producers as the recognized content item, or from the same content source of the identified content item. At step 545, the content recommendation may be displayed via one or more content output devices.

A database may comprise two or more separate databases, and when considered together, still constitute a "database" as that term is used herein. A database may be distributed across a cloud or the Internet. Various processes described herein may comprise hardware module(s), software module(s) executing on one or more hardware processors, or a combination of hardware and software modules; any of software modules may comprise instructions stored in the non-rewritable memory 202, the rewritable memory 203, the removable media 204, and/or the hard drive 205, and the instructions, when executed by one or more hardware processors may cause to perform one or more functions. Although examples are described above, features and/or steps of those examples may be combined, divided, omitted, rearranged, revised, and/or augmented in any desired manner. Various alterations, modifications, and improvements will readily occur to those skilled in the art.

Accordingly, the foregoing description is by way of example only, and is not limiting.

## Claims

1. A method comprising:
receiving, by a computing device, audio comprising a voice command and background noise;
determining, based on speech recognition, that the voice command is associated with a plurality of devices;
identifying, based on a comparison of the background noise to a database of audio fingerprints, a content item audio in the background noise;
selecting, based on the identified content item audio, a device of the plurality of devices, that outputted the content item audio; and
causing an action determined based on the voice command to be executed on the selected device.

2. The method of claim 1, further comprising narrowing, based on contextual information associated with the audio, a search space in the database of audio fingerprints, wherein the identifying the content item audio in the background noise further comprises searching the narrowed search space for a match to the background noise.

3. The method of any one of claims 1-2, further comprising:
determining, based on the audio, an identity of a user who spoke the voice command; and
narrowing, based on one or more viewing characteristics of the user, a search space in the database of audio fingerprints,
wherein the identifying the content item audio in the background noise further comprises searching the narrowed search space for a match to the background noise.

4. The method of any one of claims 1-3, further comprising:
receiving a video image associated with the audio;
identifying one or more visual objects in the video image; and
narrowing, based on the one or more visual objects, a search space in the database of audio fingerprints,
wherein the identifying the content item audio in the background noise further comprises searching the narrowed search space for a match to the background noise.

5. The method of any one of claims 1-4, further comprising:
identifying, from an image of a screen of a content output device, a logo;
narrowing, based on the identified logo, a search space in the database of audio fingerprints,
wherein the identifying the content item audio in the background noise further comprises searching the narrowed search space for a match to the background noise.

6. The method of any one of claims 1-5, further comprising:
receiving information indicating a video quality of a content item; and
narrowing, based on the video quality, a search space in the database of audio fingerprints,
wherein the identifying the content item audio in the background noise further comprises searching the narrowed search space for a match to the background noise.

7. The method of any one of claims 1-6, further comprising:
receiving information indicating a content source currently in use;
determining content items available from the content source; and
narrowing, based on the content items available from the content source, a search space in the database of audio fingerprints,
wherein the identifying the content item audio in the background noise further comprises searching the narrowed search space for a match to the background noise.

8. The method of any one of claims 1-7, wherein the voice command corresponds to:
adjusting an audio volume of a content output device; or
adjusting a temperature setting on a thermostat, and
wherein the identifying the content item audio in the background noise is further based on:
a current temperature in a room associated with the audio;
a current volume level of the audio; or
one or more content sources or applications currently in use.

9. The method of any one of claims 1-8, further comprising storing ambiguity resolution data indicating, for the voice command:
a plurality of context conditions; and
for each of the context conditions, a corresponding action to be taken.

10. The method of any one of claims 1-9, further comprising:
receiving information indicating an application currently in use; and
narrowing, based on the application, a search space in the database of audio fingerprints,
wherein the identifying the content item audio in the background noise comprises searching the narrowed search space for a match to the background noise.

11. The method of any one of claims 1-10, wherein the plurality of devices are voice-enabled devices.

12. The method of any one of claims 1-11, further comprising storing information associating the voice command with a plurality of different voice-enabled devices, wherein the information indicates one or more context conditions for each of the different voice-enabled devices.

13. The method of any one of claims 1-12, further comprising:
receiving second audio comprising a second voice command and second background noise;
determining, based on speech recognition, that the second voice command comprises a request for content recommendation;
identifying, based on a comparison of the second background noise to the database of audio fingerprints, a second content item matching the second background noise;
generating the content recommendation based on the matching content item; and
causing display of the generated content recommendation.

14. A computing device comprising:
one or more processors; and
memory storing instructions that, when executed, cause the computing device to perform the method of any one of claims 1-13.

15. One or more non-transitory computer-readable media comprising instructions that, when executed by a computing device comprising at least one processor and memory, cause the computing device to perform the method recited in any one of claims 1-13.

## Patentansprüche

1. Verfahren, umfassend:
Empfangen, durch eine Computervorrichtung, von Audio, das einen Sprachbefehl und Hintergrundgeräusch umfasst;
Bestimmen, basierend auf der Spracherkennung, dass der Sprachbefehl mit einer Vielzahl von Vorrichtungen assoziiert ist;
Identifizieren, basierend auf einem Vergleich des Hintergrundgeräusches mit einer Datenbank von Audio-Fingerprints, eines Audioinhalts im Hintergrundgeräusch;
Auswählen, basierend auf dem identifizierten Audio des Inhaltselements, einer Vorrichtung aus der Vielzahl von Vorrichtungen, die das Audio des Inhaltselements ausgegeben hat; und
Veranlassen der Ausführung einer basierend auf dem Sprachbefehl bestimmten Aktion auf der ausgewählten Vorrichtung.

2. Verfahren nach Anspruch 1, ferner umfassend Eingrenzen, basierend auf mit dem Audio assoziierten Kontextinformationen, eines Suchraums in der Datenbank von Audio-Fingerprints, wobei das Identifizieren des Audioinhalts in dem Hintergrundgeräusch ferner Durchsuchen des eingegrenzten Suchraums nach einer Übereinstimmung mit dem Hintergrundgeräusch umfasst.

3. Verfahren nach einem der Ansprüche 1 bis 2, ferner umfassend:
Bestimmen, basierend auf dem Audio, einer Identität eines Benutzers, der den Sprachbefehl gesprochen hat; und
Eingrenzen, basierend auf einem oder mehreren Betrachtungsmerkmalen des Benutzers, eines Suchraums in der Datenbank der Audio-Fingerprints,
wobei das Identifizieren des Audioinhalts in dem Hintergrundgeräusch ferner das Durchsuchen des eingegrenzten Suchraums nach einer Übereinstimmung mit dem Hintergrundgeräusch umfasst.

4. Verfahren nach einem der Ansprüche 1 bis 3, ferner umfassend:
Empfangen eines Videobildes, das mit dem Audio assoziiert ist;
Identifizieren eines oder mehrerer visueller Objekte in dem Videobild; und
Eingrenzen, basierend auf dem einen oder der mehreren visuellen Objekten, eines Suchraums in der Datenbank von Audio-Fingerprints,
wobei das Identifizieren des Audioinhalts in dem Hintergrundgeräusch ferner das Durchsuchen des eingegrenzten Suchraums nach einer Übereinstimmung mit dem Hintergrundgeräusch umfasst.

5. Verfahren nach einem der Ansprüche 1 bis 4, ferner umfassend:
Identifizieren, aus einem Bild eines Bildschirms einer Inhaltsausgabevorrichtung, eines Logos;
Eingrenzen, basierend auf dem identifizierten Logo, des Suchraums in der Datenbank von Audio-Fingerprints,
wobei das Identifizieren des Audioinhalts in dem Hintergrundgeräusch ferner das Durchsuchen des eingegrenzten Suchraums nach einer Übereinstimmung mit dem Hintergrundgeräusch umfasst.

6. Verfahren nach einem der Ansprüche 1 bis 5, ferner umfassend:
Empfangen von Informationen, die eine Videoqualität eines Inhaltselements angeben; und
Eingrenzen, basierend auf der Videoqualität, des Suchraums in der Datenbank von Audio-Fingerprints,
wobei das Identifizieren des Audioinhalts in dem Hintergrundgeräusch ferner das Durchsuchen des eingegrenzten Suchraums nach einer Übereinstimmung mit dem Hintergrundgeräusch umfasst.

7. Verfahren nach einem der Ansprüche 1 bis 6, ferner umfassend:
Empfangen von Informationen, die eine aktuell verwendete Inhaltsquelle angeben;
Bestimmen von Inhaltselementen, die von der Inhaltsquelle verfügbar sind; und
Eingrenzen, basierend auf von der Inhaltsquelle verfügbaren Inhaltselemente, eines Suchraums in der Datenbank von Audio-Fingerprints,
wobei das Identifizieren des Audioinhalts in dem Hintergrundgeräusch ferner das Durchsuchen des eingegrenzten Suchraums nach einer Übereinstimmung mit dem Hintergrundgeräusch umfasst.

8. Verfahren nach einem der Ansprüche 1 bis 7, wobei der Sprachbefehl Folgendem entspricht:
Einstellen der Audiolautstärke einer Inhaltsausgabevorrichtung; oder
Einstellen der Temperatur an einem Thermostat, und
wobei das Identifizieren des Audioinhalts in dem Hintergrundgeräusch ferner basierend auf den folgenden Punkten erfolgt:
einer aktuellen Temperatur in einem mit dem Audio assoziierten Raum;
einem aktuellen Lautstärkepegel des Audios; oder
einer oder mehreren aktuell genutzten Inhaltsquellen oder Anwendungen.

9. Verfahren nach einem der Ansprüche 1 bis 8, ferner umfassend Speichern von Daten zur Auflösung von Mehrdeutigkeiten, die für den Sprachbefehl Folgendes angeben:
eine Vielzahl von Kontextbedingungen; und
für jede der Kontextbedingungen eine entsprechende Aktion, die zu ergreifen ist.

10. Verfahren nach einem der Ansprüche 1 bis 9, ferner umfassend:
Empfangen von Informationen, die eine aktuell verwendete Anwendung angeben; und
Eingrenzen des Suchraums in der Datenbank von Audio-Fingerprints basierend auf der jeweiligen Anwendung,
wobei das Identifizieren des Audioinhalts in dem Hintergrundgeräusch das Durchsuchen des eingegrenzten Suchraums nach einer Übereinstimmung mit dem Hintergrundgeräusch umfasst.

11. Verfahren nach einem der Ansprüche 1 bis 10, wobei die Vielzahl der Vorrichtungen sprachfähige Vorrichtungen sind.

12. Verfahren nach einem der Ansprüche 1 bis 11, ferner umfassend das Speichern von Informationen, die den Sprachbefehl mit einer Vielzahl verschiedener sprachfähiger Vorrichtungen verknüpfen, wobei die Informationen eine oder mehrere Kontextbedingungen für jedes der verschiedenen sprachfähigen Vorrichtungen angeben.

13. Verfahren nach einem der Ansprüche 1 bis 12, ferner umfassend:
Empfangen eines zweiten Audios, das einen zweiten Sprachbefehl und ein zweites Hintergrundgeräusch umfasst;
Bestimmen, basierend auf der Spracherkennung, dass der zweite Sprachbefehl eine Anforderung für eine Inhaltsempfehlung umfasst;
Identifizieren, basierend auf einem Vergleich des zweiten Hintergrundgeräusches mit der Datenbank von Audio-Fingerprints, eines zweiten Inhaltselements, der mit dem zweiten Hintergrundgeräusch übereinstimmt;
Erzeugen der Inhaltsempfehlung basierend auf dem übereinstimmenden Inhaltselement; und
Veranlassen der Anzeige der erzeugten Inhaltsempfehlung.

14. Computervorrichtung, umfassend:
einen oder mehrere Prozessoren; und
Speicher, in dem Anweisungen gespeichert sind, die bei ihrer Ausführung bewirken, dass die Computervorrichtung das Verfahren nach einem der Ansprüche 1 bis 13 ausführt.

15. Ein oder mehrere nicht-übertragbare computerlesbare Medien, die Anweisungen umfassen, die, wenn sie von einer Computervorrichtung mit mindestens einem Prozessor und einem Speicher ausgeführt werden, die Rechenvorrichtung veranlassen, das in einem der Ansprüche 1 bis 13 genannte Verfahren durchzuführen.

## Revendications

1. Un procédé comprenant :
la réception, par un dispositif informatique, d'un signal audio comprenant une commande vocale et un bruit de fond ;
la détermination, sur la base d'une reconnaissance vocale, que la commande vocale est associée à une pluralité de dispositifs ;
l'identification, sur la base d'une comparaison du bruit de fond avec une base de données d'empreintes audio, d'un élément de contenu audio dans le bruit de fond ;
la sélection, sur la base de l'élément de contenu audio identifié, d'un dispositif de la pluralité de dispositifs, qui a émis l'élément de contenu audio ; et
la génération d'une action déterminée sur la base de la commande vocale à exécuter sur le dispositif sélectionné.

2. Procédé selon la revendication 1, comprenant en outre le rétrécissement, sur la base d'informations contextuelles associées à l'audio, d'un espace de recherche dans la base de données d'empreintes audio, l'identification de l'élément de contenu audio dans le bruit de fond comprenant en outre la recherche dans l'espace de recherche rétréci d'une correspondance avec le bruit de fond.

3. Procédé selon l'une quelconque des revendications 1 à 2, comprenant en outre :
la détermination, sur la base de l'audio, d'une identité d'un utilisateur qui a prononcé la commande vocale ; et
le rétrécissement,, sur la base d'une ou plusieurs caractéristiques de visualisation de l'utilisateur, un espace de recherche dans la base de données d'empreintes audio,
dans lequel l'identification de l'élément de contenu audio dans le bruit de fond comprend en outre la recherche dans l'espace de recherche rétréci d'une correspondance avec le bruit de fond.

4. Procédé selon l'une quelconque des revendications 1 à 3, comprenant en outre :
la réception d'une image vidéo associée à l'audio ;
l'identification d'un ou plusieurs objets visuels dans l'image vidéo ; et
le rétrécissement, sur la base du ou des objets visuels, d'un espace de recherche dans la base de données d'empreintes audio,
dans lequel l'identification de l'élément de contenu audio dans le bruit de fond comprend en outre la recherche dans l'espace de recherche rétréci d'une correspondance avec le bruit de fond.

5. Procédé selon l'une quelconque des revendications 1 à 4, comprenant en outre :
l'identification, à partir d'une image d'un écran d'un dispositif de sortie de contenu, d'un logo ;
le rétrécissement, sur la base du logo identifié, d'un espace de recherche dans la base de données d'empreintes audio,
dans lequel l'identification de l'élément de contenu audio dans le bruit de fond comprend en outre la recherche dans l'espace de recherche rétréci d'une correspondance avec le bruit de fond.

6. Procédé selon l'une quelconque des revendications 1 à 5, comprenant en outre :
la réception d'informations indiquant une qualité vidéo d'un élément de contenu ; et
le rétrécissement, en fonction de la qualité vidéo, d'un espace de recherche dans la base de données d'empreintes audio,
dans lequel l'identification de l'élément de contenu audio dans le bruit de fond comprend en outre la recherche dans l'espace de recherche rétréci d'une correspondance avec le bruit de fond.

7. Procédé selon l'une quelconque des revendications 1 à 6, comprenant en outre :
la réception d'informations indiquant une source de contenu actuellement utilisée ;
la détermination d'éléments de contenu disponibles à partir de la source de contenu ; et
le rétrécissement, en fonction des éléments de contenu disponibles à partir de la source de contenu, d'un espace de recherche dans la base de données d'empreintes audio,
dans lequel l'identification de l'élément de contenu audio dans le bruit de fond comprend en outre la recherche dans l'espace de recherche rétréci d'une correspondance avec le bruit de fond.

8. Procédé selon l'une quelconque des revendications 1 à 7, dans lequel la commande vocale correspond à :
le réglage d'un volume audio d'un dispositif de sortie de contenu ; ou
le réglage de température sur un thermostat, et
dans lequel l'identification de l'élément de contenu audio dans le bruit de fond est en outre basée sur :
une température actuelle dans une pièce associée à l'audio ;
un niveau de volume actuel de l'audio ; ou une ou plusieurs sources de contenu ou applications actuellement utilisées.

9. Procédé selon l'une quelconque des revendications 1 à 8, comprenant en outre le stockage de données de résolution d'ambiguïté indiquant, pour la commande vocale :
une pluralité de conditions de contexte ; et
pour chacune des conditions de contexte, une action correspondante à entreprendre.

10. Procédé selon l'une quelconque des revendications 1 à 9, comprenant en outre :
la réception d'informations indiquant une application actuellement utilisée ; et
le rétrécissement, en fonction de l'application, d'un espace de recherche dans la base de données d'empreintes audio,
dans lequel l'identification de l'élément de contenu audio dans le bruit de fond comprend la recherche dans l'espace de recherche rétréci d'une correspondance avec le bruit de fond.

11. Procédé selon l'une quelconque des revendications 1 à 10, dans lequel la pluralité de dispositifs sont des dispositifs à commande vocale.

12. Procédé selon l'une quelconque des revendications 1 à 11, comprenant en outre le stockage d'informations associant la commande vocale à une pluralité de dispositifs à commande vocale différents, les informations indiquant une ou plusieurs conditions de contexte pour chacun des différents dispositifs à commande vocale.

13. Procédé selon l'une quelconque des revendications 1 à 12, comprenant en outre :
la réception d'un second audio comprenant une seconde commande vocale et un second bruit de fond ;
la détermination, en fonction de la reconnaissance vocale, que la seconde commande vocale comprend une demande de recommandation de contenu ;
l'identification, sur la base d'une comparaison du second bruit de fond avec la base de données d'empreintes audio, d'un second élément de contenu correspondant au second bruit de fond ;
la génération de la recommandation de contenu sur la base de l'élément de contenu correspondant ; et l'étape consistant à
provoquer l'affichage de la recommandation de contenu générée.

14. Dispositif informatique comprenant :
un ou plusieurs processeurs ; et
une mémoire stockant des instructions qui, lorsqu'elles sont exécutées, amènent le dispositif informatique à exécuter le procédé selon l'une quelconque des revendications 1 à 13.

15. Un ou plusieurs supports non transitoires lisibles par ordinateur comprenant des instructions qui, lorsqu'elles sont exécutées par un dispositif informatique comprenant au moins un processeur et une mémoire, amènent le dispositif informatique à exécuter le procédé selon l'une quelconque des revendications 1 à 13.
